# EUROPÄISCHE PATENTSCHRIFT

(11) **EP 0 616 146 B1**
(45) Veröffentlichungstag und Bekanntmachung des Hinweises auf die Patenterteilung: **12.06.1996**
(21) Anmeldenummer: 94103877.0
(22) Anmeldetag: 14.03.1994
(51) Int. Cl.: F16F 9/46

(54) **Dämpfventileinrichtung**
Damper valve assembly
Assemblage de clapet amortisseur

(30) Priorität: 18.03.1993 DE 4308603; 03.03.1994 DE 4406918
(43) Veröffentlichungstag der Anmeldung: 21.09.1994
(73) Patentinhaber: FICHTEL & SACHS AG, D-97424 Schweinfurt (DE)
(72) Erfinder: Förster, Andreas, D-97422 Schweinfurt (DE)

(56) Entgegenhaltungen:
- EP-A- 0 200 446
- GB-A- 2 257 231

## Beschreibung

Die Erfindung betrifft einen Schwingungsdämpfer gemäß dem Oberbegriff von Patentanspruch 1.

Aus der DE-OS 41 18 030 ist ein Schwingungsdämpfer bekannt, der mit einer Dämpfventileinrichtung ausgestattet ist, die aus einem Hauptstufenventil und einem Vorstufenventil gebildet wird. Das Vorstufenventil besteht für jeweils eine Durchströmrichtung aus einem Entlastungskolben, der innerhalb einer Vorsteuerkammer axial verschiebbar ist. Die Verschiebebewegung der Entlastungskolben erfolgt jeweils durch die Druckkraft des Dämpfmediums, wobei sich die Bewegung der beiden Entlastungskolben unter dem Einfluß des Dämpfmediums zeitgleich und mit derselben Bewegungsrichtung vollzieht. Das heißt, daß sich der bei der Anströmung dem sich verkleinernden Arbeitsraum zugewandte Entlastungskolben in den Vorsteuerraum und der andere Entlastungskolben heraus bewegt. Daraus ergibt sich ein erhöhter axialer Platzbedarf für die Dämpfventileinrichtung. Insgesamt stellt die Baugröße der Ventileinrichtung einen erheblichen Nachteil dar.

Ein weiterer Nachteil dieser Ventilkonstruktion ist darin zu sehen, daß Leckströme aus dem Vorsteuerraum einen bedeutenden Einfluß auf das Öffnungsverhalten des Hauptstufenventils haben. Die Spaltdichtung zwischen dem verbindenden Stutzen der Ventileinrichtung und den beiden Entlastungskolben, sowie die Leckverluste zwischen dem Schieber und dem Stutzen, addieren sich. Diese Leckverluste sind maßgeblich abhängig von den Toleranzen der betroffenen Bauteile. In der Folge bestimmen die Leckverluste indirekt das Öffnungsverhalten der Hauptventilstufe.
Aufgabe der vorliegenden Erfindung ist es, eine raumsparende Dämpfventileinrichtung zu realisieren, die einen einfachen Aufbau und ein von den Leckverlusten unabhängiges Betriebsverhalten besitzt.

Erfindungsgemäß wird die Aufgabe durch den Patentanspruch 1 gelöst.

Vorteilhafterweise verringert sich im Vergleich zum genannten Stand der Technik eindeutig der axiale Aufwand für die Dämpfventileinrichtung. Durch die Funktionsverbindung zwischen Hauptstufenventilkörper und Begrenzung des Steuerraums reduzieren und vereinfachen sich die Teile bzw. Teilezahl.

Bei einer Ausführungsvariante ist vorgesehen, daß, aus gehend von einem Schwingungsdämpfer gemäß dem Oberbegriff des Anspruchs 1, das Hauptventil vom Hauptstrom und das Vorsteuerventil vom Nebenstrom in beiden Strömungsrichtungen durchströmt wird. Rückschlagventile, die einen erheblichen Bauraum bedürfen, entfallen. Die beidseitige Durchströmungsrichtung verringert die Gefahr der Verschmutzung innerhalb der Dämpfventileinrichtung. Dazu verringert sich die Anzahl der bewegbaren Teile, wobei sich zusätzlich eine Kostenreduzierung einstellt.

Weiterhin ist vorteilhafterweise vorgesehen, daß innerhalb des Dämpfventilkörpers der Nebenstrom des Dämpfmediums durch den Steuerraum und der Hauptstrom durch Verbindungskanäle radial außerhalb des Steuerraums verlaufen und ein von dem Aktuator gebildeter Vorraum konzentrisch zum Steuerraum angeordnet ist, wobei zwischen Vorraum und einem Arbeitsraum in mindestens eine Strömungsrichtung eine Verbindung besteht und dabei eine radiale Strömungsverbindung, die vom Aktuator beeinflußt wird, zwischen dem Steuerraum und dem Vorraum vorgesehen ist. Der Einfluß der Leckagen ist praktisch ausgeschlossen. Gleichzeitig wurde durch die radiale Anordnung der Dämpfventilräume und der Verbindungskanäle sichergestellt, daß auch große Volumenströme der Hauptstufen realisiert werden können. Die Strömungswege des Nebenstroms konnten zu dem kurz gehalten werden, so daß auch möglicher Schmutz keine Funtionsbeeinträchtigung bewirken kann.

Zur Realisierung des radialen Bauraums und dem Ziel große Durchflußquerschnitte innerhalb der Dämpfventileinrichtung zu ermöglichen, ist vorgesehen, daß innerhalb des Dämpfventilkörpers zumindest für eine Durchströmungsrichtung der Haupt- und der Nebenstrom eine gemeinsame Zuströmöffnung besitzen.

Besteht der Wunsch, die Dämpfkraftverstellung für beide Durchflußrichtungen der Dämpfventileinrichtung gleichsinnig zu verändern, d.h. gleichmäßig für die Zug- und Druckrichtung härter oder weicher werden zu lassen, so ist die Dämpfventileinrichtung mit Rückschlagventilen für den Haupt- und/oder Nebenstrom derart ausgerüstet, daß für beide Durchströmungsrichtungen des Steuerraums die Dämpfkraftverstellung durch Steuerung des Abflusses des Nebenstroms zwischen dem Steuerraum und dem Vorraum erfolgt.

Eine Alternativausführung der Erfindung sieht so aus, daß die Dämpfventileinrichtung mit Rückschlagventilen für den Haupt- und/oder Nebenstrom derart ausgerüstet ist, daß für eine Durchströmungsrichtung des Steuerraums die Dämpfkraftverstellung durch Steuerung des Zuflusses und für die andere der Abfluß des Nebenstroms zwischen dem Steuerraum und dem Vorraum erfolgt. Eine Anwendung besteht immer dann, wenn mit einer verstellbaren Dämpfkraft auch eine Horizontierung eines Fahrzeuges erreicht werden soll. Wird für eine Durchflußrichtung die Dämpfung härter eingestellt, wird gleichzeitig die entgegengesetzte Dämpfrichtung weicher.

Gemäß einem vorteilhaften Unteranspruch weist der Hauptstufenventilkörper Drosselbohrung auf, durch die der Nebenstrom in den Steuerraum einströmt. Des weiteren weisen die Bohrungen zu den Steuerräumen bzw. zum Vorraum richtungsabhängig wirksame Durchlaßventile auf, die in Ausströmrichtung der jeweiligen Räume einen größeren Drosselquerschnitt freigeben als in Einströmrichtung. Durch diese vorteilhafte Maßnahme kann die Bandbreite der Vorsteuerung größer gehalten werden, da das Verhältnis vom Einströmquerschnitt zu Ausströmquerschnitt als Maß für die Spreizung der Vorsteuerung anzusehen ist.

Vorteilhafterweise sind die Hauptstufenventilkörper mit Rückschlagventilen vorgesehen, die in Einströmrichtung des Nebenstroms in den Steuerraum öffnen. Damit wird wiederum der Strömungsweg des Nebenstroms verkürzt bzw. vereinfacht, um im Gegensatz zum Stand der Technik einen verwinkelten Strömungspfad zu vermeiden. In einer Ausführungsvariante wird mindestens eines der Rückschlagventile durch einen elastisch verformbaren Schließring gebildet. Dieser wird in Abhängigkeit des zu erwartenden Druckniveaus im Schwingungsdämpfer aus Kunststoff oder Gummi gefertigt bzw. bei hohen Drücken als ein geschlitzter Metallring ausgebildet sein.

Des weiteren können die Hauptstufenventile vorteilhafterweise eine richtungsabhängige Dämpfkraftkennlinie besitzen, die durch mehrere Federn gebildet werden, wobei sich an einem Hauptstufenventilkörper die Federn gemeinsam abstützen und am anderen Hauptstufenventilkörper ein Anteil der Federn angreift, so daß sich die Federkräfte für einen Hauptstufenventilkörper addieren und für den anderen ein Anteil der Federkräfte wirksam ist. Die Federn können konzentrisch innerhalb des Steuerraums angeordnet sein. Es ist kein zusätzlicher Bauraum für die Federn notwendig. Alternativ können die richtungsabhängigen Dämpfkraftkennlinien durch mehrere Federn realisiert werden, indem sich an einem Hauptstufenventilkörper eine der Federn abstützt und am anderen Hauptstufenventilkörper eine zugehörige, wobei beide Federn an einer relativ zum Dämpfventilzwischengehäuse ortsfesten Federführung wechselseitig angreifen. Der Vorteil liegt darin, daß die Federkräfte die Hauptstufenventile nicht wechselseitig beeinflussen, so daß eine unabhängige Dämpfkraftauslegung für die beiden Durchströmungsrichtungen möglich ist.

Zur Vermeidung von unerwünschten Dämpfkraftspitzen weist die Dämpfventileinrichtung mindestens ein Druckbegrenzungsventil auf. Bei einem unverschlossenem Voröffnungsquerschnitt regelt das Dämpfventil selbständig ab und bildet dadurch ein Druckbegrenzungsventil. Gemäß einem vorteilhaften Merkmal können die Rückschlagventile für die Hauptströme mit Druckbegrenzungsventilen versehen sein.

Eine vorteilhafte Ausführungsvariante sieht so aus, daß das Rückschlagventil für den Hauptstrom aus einem durch die Feder auf den Dämpfventilkörper vorgespannten Rückschlagkörper besteht mit einem Verbindungsquerschnitt zu beiden Seiten des Ventilkörpers, der wiederum durch eine federbelasteten Schließkörper abgedeckt ist, so daß in einer Durchströmrichtung des Hauptstromes der Schließkörper sperrt und in anderer Richtung der Rückschlagventilkörper von Dämpfventilkörper abhebt.

Lassen es sie Raumverhältnisse zu, so besteht die vorteilhafte Möglichkeit, daß die Rückschlagventile für die Nebenströme mit Druckbegrenzungsventilen ausgestattet sind. Die Durchtrittsquerschnitte der Rückschlagventile können sehr klein ausgeführt sein, um trotzdem voll wirksam zu sein.

Bei einer Ausführungsform ist vorteilhafterweise das Überdruckventil für den Nebenstrom innerhalb des Steuerraums angeordnet, wobei das Überdruckventil und das Rückschlagventil als Kombinationsbauteil ausgeführt und als zwei Scheibenkörper miteinander verspannt sind, die wechselseitig von ihren Ventilsitzflächen abheben.

Zur Vereinfachung des Hauptventilkörpers kann dieser aus zwei Einzelkörpern bestehen, wobei der eine den Führungskörper und der andere den Sitzkörper darstellt.

Anstelle oder in Kombination mit einem Überdruckventil kann vorteilhafterweise vorgesehen sein, daß das Vorstufenventil stets teilgeöffnet ist, so daß das Hauptstufenventil gleichzeitig ein Druckbegrenzungsventil darstellt. Dafür sind vorteilhafterweise die hydraulisch wirksamen ventilöffnenden Flächen des Hauptstufenventilkörpers größer als die ventilschließenden.

Der Aktuator besteht in einer Ausführungsform aus einem Stellmotor in Verbindung mit einem Drehschieber. Diese Variante zeichnet sich durch einen sehr großen Nebenstromquerschnitt aus.

Alternativ besteht der Aktuator aus einem Ringmagneten in Verbindung mit einem axial verschiebbaren Anker. Diese Version ist besonders dann interessant, wenn die Öffnungsposition des Aktuators für eine Dämpfkraftregelung benötigt wird, da der Aktuatorstrom dem Stellweg des Aktuators proportional ist.

Zur Reduzierung der Verschmutzungsgefahr und der damit verbundenen Funktionsrisiken ist der verschiebbare Anker als ein Sitzventil ausgebildet. Vorteilhafterweise ist innerhalb des Ankers eine Koppelstange angeordnet, die an wenigstens einem Ende ballig ausgeführt ist und mit einer angepaßten Gegenfläche einen Winkelversatzausgleich bildet.
Damit ein möglichst großes Kennlinienfeld mit der Dämpfventileinrichtung realisierbar ist, ist der Aktuator stufenlos verstellbar.

Sollen dagegen nur bestimmte Dämpfkraftkennlinien von der Dämpfventileinrichtung umgesetzt werden, so kommt ein Aktuator zum Einsatz, der gestuft verstellbar ist. Mit dem gestuften Aktuator können innerhalb der Dämpfventileinrichtung die Toleranzen zwischen dem Steuerraum und dem Vorraum größer gewählt werden.

Eine besonders vorteilhafte Dämpfventileinrichtung besitzt zwei getrennte Steuerräume, wobei pro Durchströmungsrichtung ein Steuerraum durchströmt wird und die Verbindungen zwischen den Steuerräumen und dem Vorraum von einem gemeinsamen Aktuator gesteuert werden, so daß insgesamt zwei Grundeinstellungsbereiche der Dämpfeinrichtungen entstehen, wobei der eine eine für beide Durchströmungsrichtungen gleichsinnige Dämpfkraftverstellung mit sich bringt. Diese Ausführung einer Dämpfventileinrichtung kombiniert eine konventionelle Verstellung der Dämpfkraft, bei der für beide Durchströmungsrichtungen gleichmäßig die Dämpfkraft erhöht oder verringert wird mit einer Verstellung, bei der für die eine Durchströmungsrichtung die Dämpfkraft erhöht und gleichzeitig für die andere verringert wird und umgekehrt. Es werden vorteilhafterweise ein konventionelles und ein sogenanntes "Skyhook-Kennfeld" innerhalb einer Dämpfventileinrichtung realisiert.

Für denselben Anwendungsfall kann eine Dämpfungseinrichtung zur Anwendung kommen, die zwei getrennte Steuerräume besitzt, wobei pro Durchströmungsrichtung ein Steuerraum durchströmt wird und die Verbindungen zwischen den Steuerräumen und dem Vorraum von einem gemeinsamen Aktuator gesteuert werden, so daß pro Durchströmungsrichtung mindestens zwei verschiedene Dämpfkraftkennlinien vorliegen, die in Abhängigkeit der Aktuatorstellung gleichsinnig oder wechselseitig eingestellt werden können. Die Zahl der Dämpfkraftkennlinien wird durch die Anzahl der steuerbaren Verbindungen festgelegt.

Mit der vorteilhaften Ausgestaltung, daß die Verbindung zwischen dem Vorraum und dem Steuerraum den Voröffnungsquerschnitt darstellt, wird erreicht, daß der Dämpfkraftkennlinienverlauf anwendungsgerechter gestaltet werden kann. Gerade bei geringen Strömungsmittelgeschwindigkeiten und einer weichen Dämpfkrafteinstellung bewirkt ein größerer Voröffnungsquerschnitt ein besseres Ansprechverhalten des Schwingungsdämpfers.

Zur Reduzierung der Einzelteile besteht das Dämpfventilgehäuse aus jeweils einem eindseitigen Dämpfventilkopfkörper und einem Dämpfventilzwischenkörper. In konsequenter Weiterentwicklung dieses Merkmals sind die Dämpfventilkopfkörper spiegelbildlich innerhalb des Dämpfventilgehäuses angeordnet.

Das Dämpfventilgehäuse mit seiner "geschichteten" Bauweise beeinflußt die Vorspannung der die Hauptventilstufenkörper belastenden Federn, so daß es zu Streuungen der Dämpfkräfte kommen kann. Zum Ausgleich dieses Fehlers ist vorteilhafterweise vorgesehen, daß konzentrisch zum Dämpfventilzwischenkörper ein Mantelrohr angeordnet ist und sich mindestens ein Dämpfventilkopfkörper vor seiner Fixierung mit dem Mantelrohr relativ zu diesem verschieben läßt, so daß sich die axiale Baulänge des Dämpfventilzwischenkörpers willkürlich einstellen läßt. In erster Linie ist die Baulänge des Dämpfventilzwischenkörpers die Ursache für die Dämpfkraftabweichungen. Indem man den Dämpfventilzwischenkörper über mindestens einen Dämpfventilkopfkörper staucht, kann die Baulängentoleranz im wesentlichen ausgeglichen werden. Die entsprechende Elastizität des Dämpfventilzwischenkörpers läßt sich sehr einfach dadurch herstellen, indem man den Dämpfventilzwischenkörper beispielsweise aus Aluminium fertigt. Es ist vorgesehen, daß die Fixierung zwischen dem Dämpfventilzwischenkörper und dem Mantelrohr mittels einer plastischen Umformung erfolgt, beispielsweise durch eine Verstemmung, wobei aber auch andere bekannte Verbindungen angewandt werden können.

Man kann den Dämpfventilkörper und den Dämpfventilzwischenkörper auch zu einer Baueinheit zusammenfassen, so daß das Dämpfventilgehäuse nur aus zwei Bauteilen besteht.

Vorteilhafterweise zentrieren sich die Hauptstufenventile an einem der Kolbenstage zugeordneten Zapfenabschnitt. Diese Zentrierung ist mit einer Dichtung versehen, die die Leckagen auf ein vernachlassigbares Maß reduziert. Im Gegensatz zum genannten Stand der Technik muß nur der Innendurchmesser enger toleriert werden. Der Außendurchmesser des Hauptventilkörpers spielt für die Leckagen überhaupt keine Rolle, da er keinerlei Dichtfunktion übernehmen muß.

Sollte einmal der Fall eintreten, daß die Magentspule des Aktuators keine Stromversorgung besitzt, so verfügt die Dämpfventileinrichtung vorteilhafterweise über eine Notbetriebsstellung, die aus einer Federanordnung besteht, die den Anker des Aktuators gegen eine Anlagefläche drückt, womit eine mittlere Dämpfkrafteinstelleung verbunden ist.

Zur Reduzierung der Stellkräfte und entsprechend des Strombedarf 5 besitzt der Aktuator vorteilhafterweise ein druckausgeglichenes Stellglied.

Eine Ausführungsvariante weist einen zweigeteilten Steuerraum auf, wobei die beiden Steuerraumteile über das Vorstufenventil verbunden sind. Des weiteren kann der Zustrom über Verbindungsbohrungen außerhalb der Hauptstufenventilkörper erfolgen. Dadurch vereinfacht sich der Hauptstufenventilkörper als Einzelbauteil.

Anhand der folgenden Figurenbeschreibung soll die Erfindung näher erläutert werden.

Es zeigt:
- Fig. 1a: Dämpfventileinrichtung mit Drehschieberaktuator
- Fig. 1b: Ausschnitt aus dem Hauptventilkörperbereich
- Fig. 2: Dämpfventilenrichtung mit Ringmagnet und Anker
- Fig. 3: Dämpfventileinrichtung mit wechselsinniger Dämpfkraftverstellung
- Fig. 4: Dämpfventileinrichtung mit Überdruckventilen
- Fig. 5: Dämpfventileinrichtung mit Überdruckventil im Hauptstufenventilkörper
- Fig. 6: Dämpfventileinrichtung mit einem Sitztventil
- Fig. 7a-d: stufenlos schaltbare Dämpfventileinrichtung mit zwei Steuerräumen.
- Fig. 8a-d: gestufte Dämpfventileinrichtung mit zwei Steuerräumen
- Fig. 9-10: Dämpfventileinrichtung mit beidseitiger Duchströumgsrichtung

Die Fig. la beschränkt sich in Ihrer Darstellung auf eine Dämpfventileinrichtung 1 an einer hohlen Kolbenstange 3. Die Dämpfventileinrichtung 1 umfaßt unter anderem ein Dämpfventilgehäuse 5, das wiederum endseitig jeweils einen Dämpfventilkopfkörper 7 und zwei Dämpfventilzwischenkörper 9 aufweist. Die beiden Dämpfventilzwischenkörper 9 sind identisch ausgeführt, aber spiegebildlich angeordnet, so daß Duchgangsbohrungen Verbindungskanäle 11a/b bilden, die radiale Anbindungen als Zufluß 13 zu Zuströmöffnungen 15 aufweisen. Radial weiter innen bezogen auf die Verbindungskanäle bilden ein Zapfenabschnitt 17 der Kolbenstange 3 mit dem Dämpfventilzwischenkörper 9 einen Steuerraum 19, der axial von jweils einem Hauptstufenventilkörper 21a/b begrenzt wird. Koaxial zum Steuerrraum 19 ist ein Vorraum 23 angeordnet, der über radiale Strömungsverbindungen 25 mit dem Steuerraum 19 angeschlossen ist. Die gesamte Dämpfventileinrichtung 1 wird über eine Mutter 27 mit der Kolbenstage 3 verpannt.

Die Dämpfventileinrichtung 1 weist eine Reihe von Rückschlagventilen auf, die die Strömungsverhältnisse innerhalb der Dämpfventileinrichtung 1 lenken. Zum einen sind die Austrittsöffnungen der Verbindungskanäle 11a/b mit Rückschlagventilen 29a/29b versehen. Zum anderen sind die Rückschlagventile 31a/31b an bzw. in der Kolbenstange 3 angeordnet, die den Vorraum 23 jeweils zum benachbarten Arbeitsraum 33/35 absperren. Letztlich ist jeder Hauptstufenventilkörper 21a/b mit einem Rückschlagventil 37a/37b ausgerüstet, das nur den Zufluß zum Steuerraum 19 zuläßt.

Innerhalb des Vorraums 23 ist ein Drehschieber 39 angeordnet, der über Steuerstangen 41 mit einem nicht dargestellten Drehwinkelmotor verbunden ist. Der Drehschieber 39 weist Durchtrittsquerschnitte 43 auf, die eine Verbindung zwischen dem Steuerraum 19 über die radilen Strömungsverbindungen 25 beeinflußt.

Bei einer Bewegung der Dämpfventileinrichtung 1 in Richtung A muß das Dämpfmedium verdrängt werden, wobei es in die Zuströmöffnung 15a einströmt. Innerhalb der Zuströmöffnung 15a verteilt sich das Medium in einen Hauptstorm und einen Nebenstorm auf. Der Nebenstrom fließt durch den Hautpstufenventilkörper 21a und das Rückschlagventil 37a in den Steuerraum 19. In Abhängigkeit des Durchtrittsquerschnitts 43 baut sich im Steuerraum 19 ein Druck auf, der auf den Hauptstufenventilkörper 21a eine Schließkraft ausübt, die von der Kraft einer Schließfeder 45 überlagert wird. Ist die Öffnungskraft im Bereich der Zuströmöffnung 15a größer als die Schließkraft des Steuerraums 19, so hebt der Hauptstufenventilkörper 21a von einem Ventilsitz 47a ab, womit der Zufluß 13 zu den Verbindungskanälen 11a geöffnet wird. Das Rückschlagventil 31a sperrt den Arbeitsraum 33 gegenüber dem Vorraum 23, damit der Systemdruck im Arbeitsraum 33 die Schließkraft im Steuerraum 19 nicht beeinflussen kann.

Der Abfluß des Steuerraums 19 erfolgt über das Rückschlagventil 31b, das, wie im linken Halbschnitt dargestellt, nahe dem Drehschieber 39 und im rechten Halbschnitt an der Ausflußöffnung aus dem Kolbenstangenzapfenabschnitt 17 angeordnet sein kann.

Während der beschriebenen Hubbewegung schließt das Rückschlagventil 29b die Verbindungskanäle 11b, damit der Systemdruck nicht in den Steuerraum einfließen kann. Bei einer Hubbewegung in Richtung B schließen die Rückschlagventile 29a sowie 31b. Das Dämpfmedium passiert das Rückschlagventil 37b und baut die Schließkraft für den Hauptstufenventilkörper 21a auf. Über den Steuerraum 19 erfolgt der Abfluß des Nebenstroms. Der Hauptstrom ergießt sich nach dem Abheben des Hauptstufenventilkörpers 21b, der sich, wie der Hauptstufenventilköper 21b am Zapfenabschnitt 17 zentriert, in Verbindungskanäle 11b.

Die Dämpfkraft wird indirekt über die Größe des Druchtrittsquerschnittes 43 bestimmt, wobei für beide Strömungsrichtungen grundsätzlich der Abfluß des Steuerraums 19 für Dämpfkraftveränderungen benutzt wird. Folglich wirkt sich eine Änderung des Durchtrittsquerschnittes 43 grundsätzlich gleichsinnig, das heißt, für die Zug- und Druckrichtung ergeben sich gleiche Änderungen in Richtung härterer oder weicherer Dämpfkrafteinstellung. Damit übernimmt der Durchtrittsquerschnitt 43 in Verbindung mit dem Hauptventilkörper eine Druckbegrenzungsfunktion, da der Druchtrittsquerschnitt niemals ganz verschlossen ist kann bei Spitzendrücken der Hauptventilkörper 21 abheben.

Zum Aktuator ist noch auszuführen, daß der Drehschieber 39 zur Minimierung des Energieaufwandes druckausgeglichen ausgeführt ist. Des weiteren ist vorgesehen, daß der Durchtrittsquerschnitt 43, der gleichzeitig den Voröffnungsquerschnitt darstellt, stets teilgeöffnet ist. Daraus ergibt sich eine Druckbegrenzungswirkung, da der Abfluß des Steuerraums 19 niemals blockiert werden kann. Den Durchtrittsquerschnitt 43 als Voröffnungsquerschnitt heranzuziehen verändert in vorteilhafter Weise den Kennlinienverlauf der Dämpfventileinrichtung 1, da bei der Dämpfkrafteinstellung "weich" der Durchtrittsquerschnitt 43 maximal geöffnet ist. Gleichzeitig ist damit der Voröffnungequerschnitt besonders groß, so daß der Schwingungsdämpfer ein sehr weiches und komfortables Ansprechverhalten an den Tag legt.

Die radiale Anordnung des Steuerraums 19 zum Vorraum 23 in Verbindung mit den Verbindungskanälen 11a und 11b ergibt eine sehr kurze Bauweise der Dämpfventileinrichtung 1. Damit einher gehen kurze Strömungswege. Dabei wurde berücksichtigt, daß die Ströme mit dem geringsten Volumen zentral und der Hauptstrom radial nach außen auf einen großen Teilkreis gelegt wurde, um einen möglichst großen Durchsatz zu realisieren. Die Gleichheit der Teile, beispielsweise der Hauptstufenventilkörper 21a/21b oder der Dämpfventilkörper 7 und 9, reduzieren den Fertigungsaufwand erheblich.

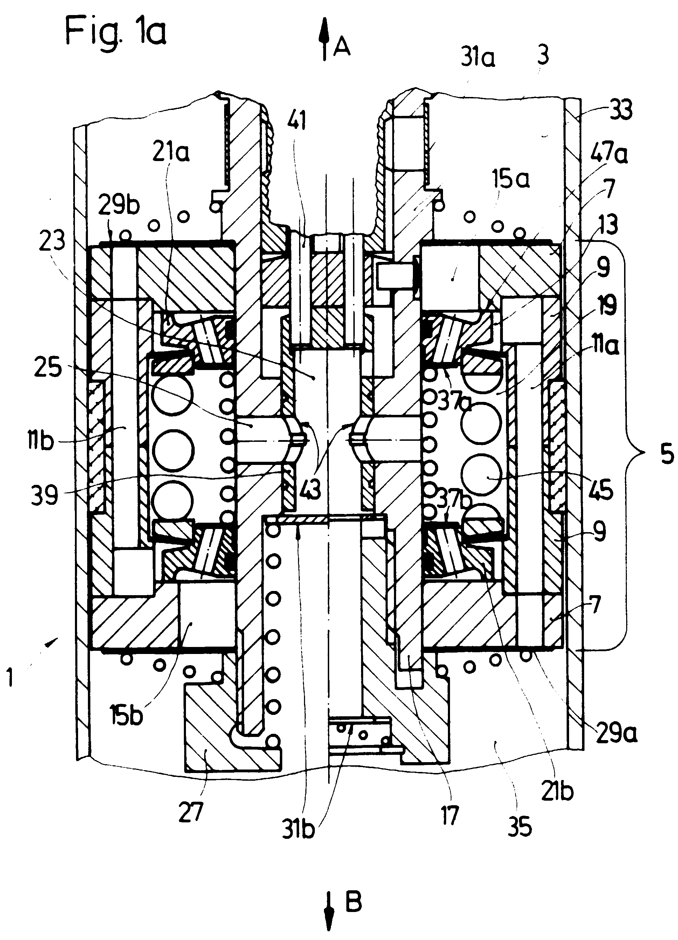

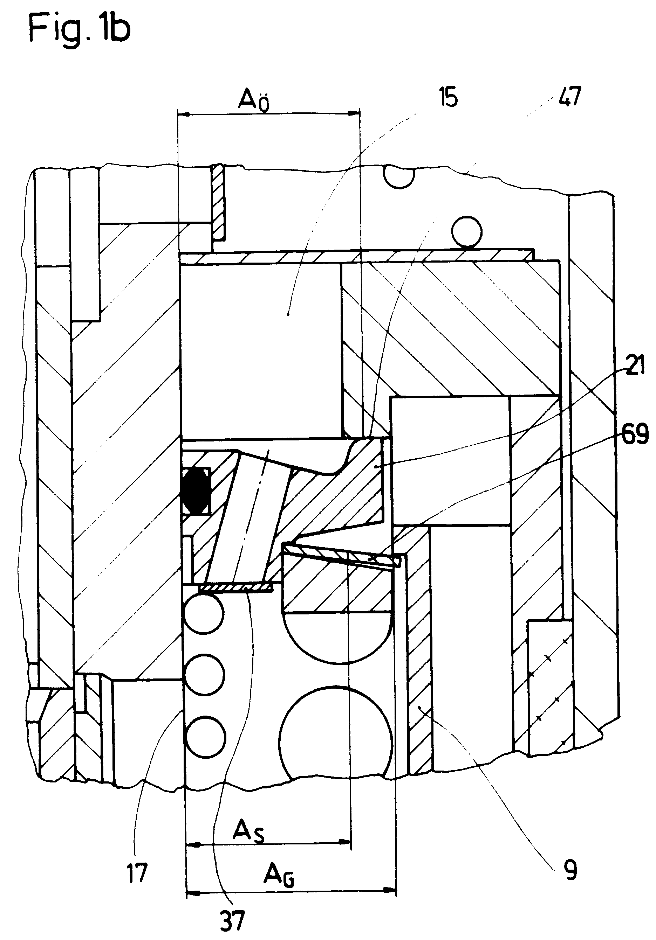

Die Figur 1b zeigt einen stark vergrößerten Ausschnitt aus der Figur 1 im Bereich des Hauptstufenventilkörpers 21. Die Wirkung des Hauptstufenventilkörpers 21 in Verbindung mit einem stets teilgeöffneten Voröffnungsquerschnitt resultiert aus einem Flächenverhältnis zwischen den steuerraumseitigen und den zuströmöffnungsseitigen hydraulischen Wirkflächen (Aö/As). Die ventilöffnende Fläche Aö ergibt sich aus der Kreisringfläche des Hauptstufenventilkörpers 21, wobei der innere Durchmesser des Ventilsitzes 47 den Außendurchmesser der Kreisringfläche Aö darstellt. Die hydraulisch beaufschlagte Fläche Ag wird von der steuerraumseitigen Fläche des Hauptstufenventilkörpers 21 und der Tellerfeder 69 gebildet. Die Tellerfeder 69 stützt sich auf dem Gehäuse 9 und auf dem Hauptstufenventilkörper 21 ab. Folglich wirkt die hydraulische Schließkraft zur Hälfte auf das Gehäuse 9 und die andere Hälfte auf den Hauptstufenventilkörper. Damit wird die ventilschließende hydraulisch beaufschlagte Wirkfläche aus der Summe der Fläche des steuerraumseitigen Hauptstufenventilkörpers und der halben wirksamen Tellerfederfläche gebildet. Für den Druckbegrenzungseffekt ist es unerläßlich, daß die ventilöffnenden Flächen größer sind als die ventilschießenden. Daraus folgt, daß bei Druckgleichheit im Steuerraum 19 und in einem sich verkleinernden Arbeitsraum die hydraulischen Öffnungskräfte gößer sind als die verschließenden. Dabei ist für die Auslegung der Schließfeder vorgesehen, daß ab einem definierten Betriebsdruck im Schwingungsdämpfer der hydraulische Druck, der auf die Differenzfläche zwischen der ventilöffnenden und der ventilschließenden wirkt, einen größeren Betrag aufweist als die Schließfeder.

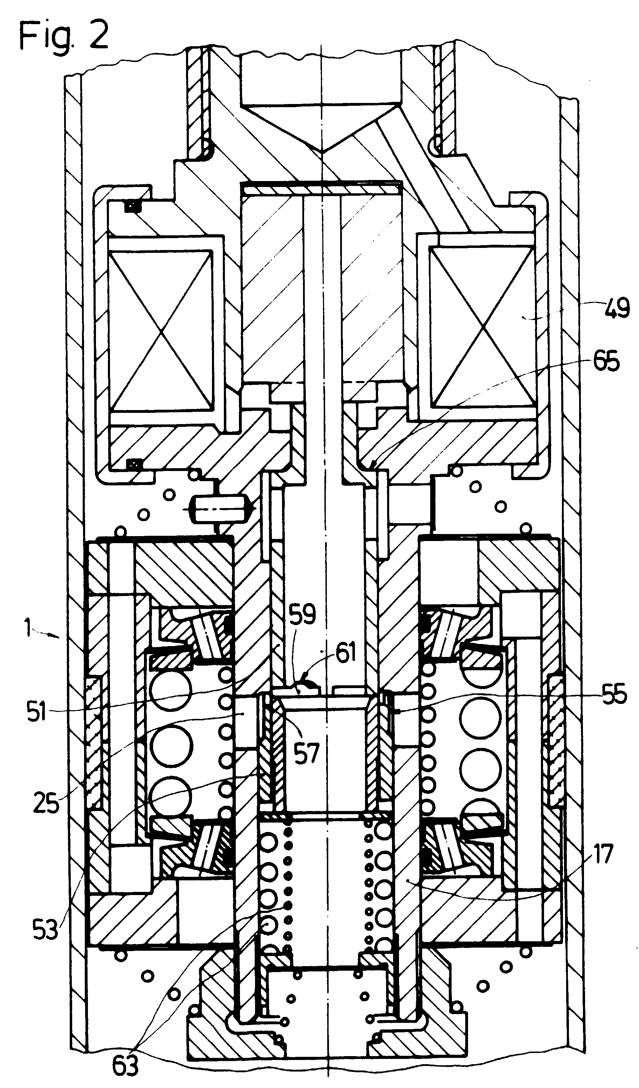

Der wesentliche Aufbau der Figur 2 entspricht der Fig. 1. Unterschiede ergeben sich durch den Aktuator, der aus einem Ringmagneten 49 in Verbindung mit einem axial verschiebbaren Anker 51 besteht, der innerhalb des Zapfenabschnittes 17 gleitend angeordnet ist. Die radiale Strömungsverbindung 25 weist eine Hülse 53 mit einem Sammelansatz 55 auf, der wiederum Ausklinkungen 57 besitzt, die zusammen mit Aussparungen 59 den Voröffnungsquerschnitt bestimmen. Der Sammelansatz 55 führt das Dämpfmedium aus dem Steuerraum zum Voröffnungsquerschnitt. Zur feinfühligen Steuerung besitzen die Aussparungen 59 grundsätzlich Anformungen 61, die beliebig gestaltet werden können, um eine gewünschte Querschnittsfläche in Abhängigkeit des Hubweges des Ankers 51 zu realisieren.

Als Fail-safe-Einrichtung, für den Fall, daß der Ringmagnet durch einen Fehler umbestromt ist, ist eine paarweise Anordnung von Schraubenfedern 63 an der Austrittsöffnung des Zapfenabschnittes 17 gegen den Anker 51 verspannt. Die Federn 63 besitzen eine geringfügige unterschiedliche Länge und differieren stark in ihrer Federrate, wobei die längere Feder 63 die geringere Federrate besitzt. Bei Stromausfall der Magnetspule 49 drückt die längere Feder den Anker 51 gegen eine Anschlagfläche 65. In dieser Stellung ist der Voröffnungsquerschnitt auf eine mittlere Größe eingestellt, so daß auch eine mittlere Dämpfkraftkennlinie zur Wirkung kommt.

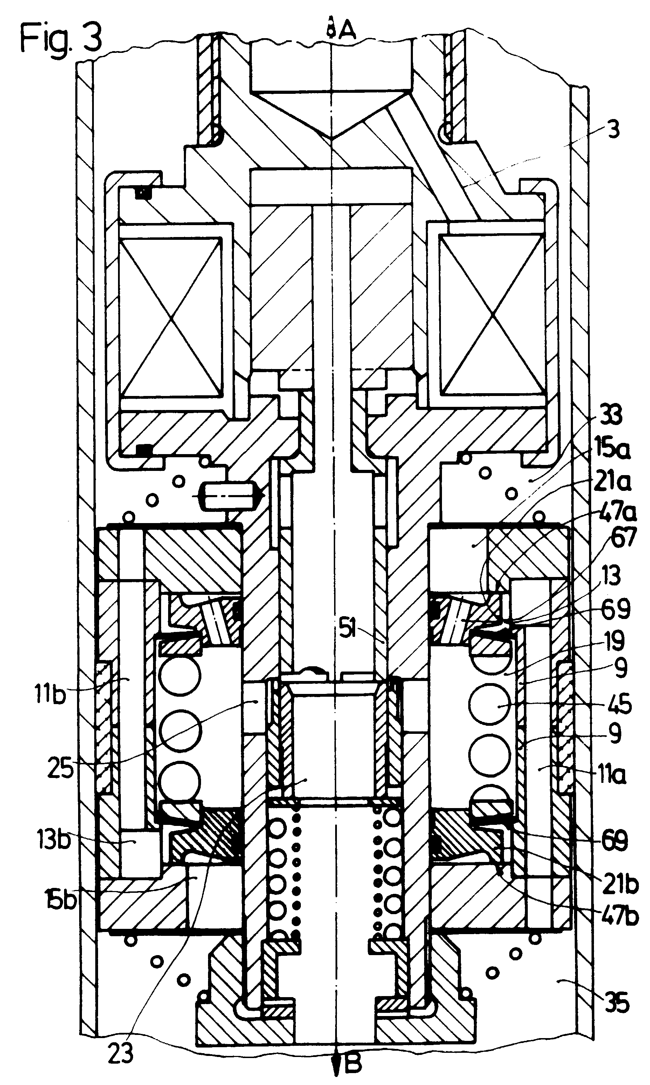

Die Fig. 3 besitzt im wesentlichen denselben Aufbau wie Fig. 2, doch ergibt es funkionale Unterschiede, die im Folgenden beschrieben werden.

Eine Abweichung zu Fig. 2 besteht unter anderem darin, daß der Steuerraum 19 keine Rückschlagventile aufweist. Der Hauptstufenventilkörper 21a besitzt nur Bohrungen 67 für den Nebenstrom und der Hauptstufenventilkörper 21b ist als ein Vollkörper ausgeführt. Auch der Vorraum 23 kommt ohne Rückschlagventil aus, wobei die Verbindung zwischen dem Vorraum 23 und den Arbeitsraum 23 entfällt und die Anbindung zum Arbeitsraum 35 ungelenkt bleibt.

Bei einer Hubbewegung der Kolbenstange 3 in Richtung A strömt das Medium in die Zuströmöffnung 15a, wobei sich der Nebenstrom durch die Bohrungen 67 in den Steuerraum 19 fortsetzt. In Abhängigkeit des Abflusses über den Durchtrittsquerschnitt - Voröffnungsquerschnitt zwischen dem Anker 51 und der Hülse 53 - wirkt auf dem Hauptstufenventilkörper 21a eine Schließkraft in Überlagerung mit der Schließfeder 45, da die steuerraumseitigen Flächen bezüglich des Hauptstufenventilkörpers 21a kleiner sind als die ventilöffnenden. Steigt der Druck im Arbeitsraum 33 weiter an, so hebt der Hauptstufenventilkörper 21a von seinem Ventilsitz 47a ab. Der radiale Zufluß 13 zu den Verbindungskanälen 11a ist geöffnet. In Zugrichtung erfolgt somit eine Dämpfkraftsteuerung über den Dämpfmediumabfluß aus dem Steuerraum 19. Bei einer Anströmung der Dämpfventileinrichtung 1 aus Richtung A drückt das Dämpfmedium den Hauptstufenventilkörper 21b gegen seinen Ventilsitz. Die Hauptstufenventilkörper 21a/b können nicht überströmt werden, da Tellerfedern 69 den Spalt zwischem dem Innendurchmesser der Dämpfventilzwischenkörper 9 und den Hauptstufenventilkörpern 21a/b abschließen.

Bei umgekehrter Anströmrichtung, also aus Richtung B, strömt das Dämfpmedium gleichzeitig in die Zuströmöffnung 15b und in den Vorraum 23. In Abhängigkeit des Voröffnungsquerschnittes kann das Dämpfmedium über die radialen Strömungsverbindungen 25 in den Steuerraum 19 unter mehr oder weniger großen Druckverlust einströmen. Beim kleinen Voröffnungsquerschnitt liegt im Steuerraum nur eine geringe Druckkraft des Dämpfmediums an, die dem in der Zuströmöffnung 15b anliegenden Systemdruck entgegensetzt.

Folglich hebt der Hauptstufenventilkörper 21b von seinem Ventilsitz 47b ab und gibt den Zufluß 13b zu den Verbindungskanälen 11b frei. Die Dämpfkraftkennlinie wird für die Richtung B aus dem Zufluß in den Steuerraum 19 eingestellt.

Geht man von einem stationären Zustand des Ankers 51 aus, bei der der Voröffnungsquerschnitt relativ groß eingestellt ist, so liegt in Hubrichtung A eine weiche und in Hubrichtung B eine harte Dämpfkraftkennlinie vor. Bei einem kleinen Voröffnungsquerschnitt liegen die Dämpfkräfte auf einem genau entgegengesetzten Niveau für beide der Strömungsrichtung. In dem Maße, wie man für die Einhubrichtung die Dämpfkrafteinstellung verändert in eine extremere Einstellung, so verläuft für die andere Hubrichtung die Dämpfkrafteinstellung konträr. Die Dämpfventileinrichtung 1 in dieser Ausführungsform ist besonders interessant, wenn man eine Horizontierung eines Fahrzeuges erreichen will, bzw. einen sogenannten SKY-hook-Dämpfer realisieren will, um die Schaltgeschwindigkeiten der Dämpfventileinrichtung 1 absenken zu können.

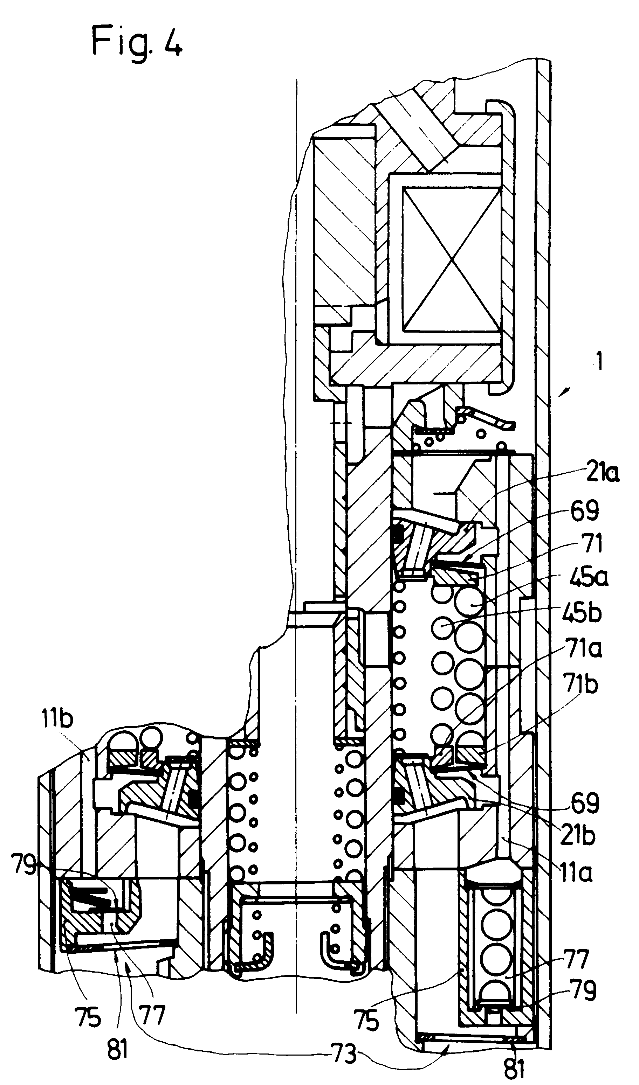

Die Fig. 4 besitzt wiederum im wesentlichen den gleichen funktionalen Aufbau wie die Fig. 2. Ein konstruktiver Unterschied besteht beispielsweise darin, daß zwei Schließfedern 45a/45b für die beiden Hauptstufenventilkörper 21a/21b zur Anwendung kommen. Der Hauptstufenventilkörper 21a besitzt für beide Federn einen gemeinsamen Abstützkörper 71, der am Innendurchmesser der Tellerfedern 69 angreift. Der Hauptstufenventilkörper 21b weist ebenfalls eine Tellerferder 69 auf, auf der sich jedoch zwei Abstützkörper 71a/71b abstützen. Für den Hauptstufenventilkörper 21a bedeutet das, daß die Summe der Federkräfte der Schließfedern 45a/45b wirksam sind, jedoch für den Hauptstufenventilkörper 21b nur die Feder 45b, da sich die Feder 45 über den Außendurchmesserbereich der Tellerfeder 9 am Dämpfventilgehäuse abstützt. Mit dieser Maßnahme wird eine richtungsabhängige Dämpfkraftgrundeinstellung erreicht, ohne den axialen Bauraum des Steuerraums 19 zu vergrößern.

Ferner verfügt die Dämpfventileinrichtung 1 über ein Überdruckventil 73, das aus einem Rückschlagventilkörper 75 besteht, in dem ein Verbindungsquerschnitt 77 eingearbeitet ist, der von einem federbelasteten Schließkörper 79 abgedeckt ist. Übersteigt der Druck auf die Schließkörper 79 ein Niveau, das oberhalb der Feder liegt, so hebt der Schließkörper 79 ab und gibt den Weg in die Verbindungskanäle 11a und 11b frei. In umgekehrter Einströmrichtung öffnet das Überdruckventil 73 praktisch ohne Druckvorlast gegen eine Führungsfeder 81.

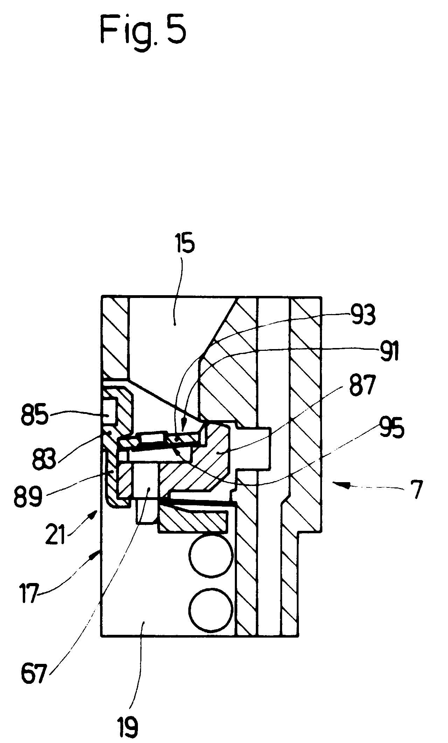

Die Darstellung der Fig. 5 beschränkt sich auf einen Ausschnitt der Dämpfventileinrichtung 1 im Bereich des Dämpfventilkörpers 7, insbesondere eines Hauptstufenventilkörpers 21. Der Hauptstufenventilkörper 21 ist zweiteilig ausgebildet. Unter anderem umfaßt er eine Hauptstufenventilkörperführung 83 mit einer Dichtung 85, die gegenüber dem Zapfenabschnitt 17 wirksam ist. Das zweite Teil stellt den eigentlichen Ventilkörper 87, der sich an einem Führungssteg 89 zentriet. In den Ventilkörper 87 sind Bohrungen 67 eingearbeitet, die in Richtung der Zuströmöffnung 15 von einem kombinierten Rückschlag- und Überdruckventil 91 abgedeckt werden, bestehend aus zwei miteinander verspannten Scheibenkörpern. Das Überdruckventil 91 wird von einer Tellerfeder 93 gebildet, die zwischen der Hauptstufenventilkörperführung 83 und dem Ventilkörper 87 verspannt ist. Die Tellerfeder 93 besitzt Durchgangsbohrungen, die von einer hochelastischen Scheibe 95 abgedeckt werden, die in Zuströmrichtung des Steuerraums 19 von der Tellerfeder 93 abhebt.

Bei Druckverhältnissen im üblichen Betriebsbereich des Schwingungsdampfers arbeitet das Rückschlagventil wie schon zu den Fig. 1 und 2 beschrieben. Das Medium strömt in die Zuströmöffnung 15, wobei sich der Nebenstrom durch die Durchgangsbohrungen der Tellerfedern 83 fortsetzt und die elastische Scheibe 95 abhebt, so daß das Dämpfmedium in den Steuerraum 19 einfließen kann. Bei umgekehrter Anströmung und einem Überdruck im Steuerraum 19 hebt der Außendurchmesser der Tellerfeder 93 vom Ventilkörper 87 ab, so daß sich der Druck im Steuerraum 19 rasch abbauen kann. Der Vorteil eines Überdruckventils im Nebenstrom besteht darin, daß nur sehr kleine Volumenströme bewältigt werden müssen, um eine Überdrucksicherung zu erzielen.

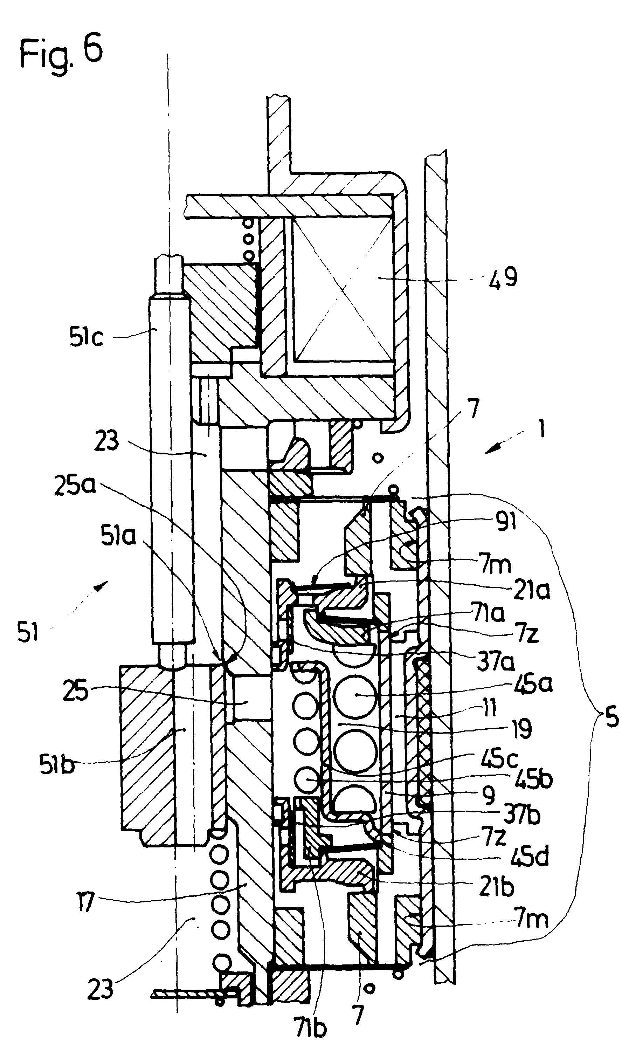

Figur 6 zeigt eine Dämpfventileinrichtung 1, die eine Kombination der Figuren 2, 4 und 5 umfaßt, so daß nur auf die konstruktiven Unterschiede eingegangen wird. Ein wesentliches Unterscheidungsmerkmal stellt der Anker 51 dar, der zusammen mit dem Zapfenabschnitt ein Sitzventil 51a bildet. Der Zapfenabschnitt besitzt im Bereich der radialen Strömungsverbindung 25 eine Schrägfläche 25a, so daß ein kontinuierliches Öffnungsverhalten des Sitzventils 51a gewährleistet ist. Der Anker weist eine Verbindungsbohrung 51b auf, so daß beide Teile des Vorraums 23 verbunden sind und der Anker 51 druckausgeglichen ist. Des weiteren ist innerhalb des Ankers 51 eine Koppelstange 51c angeordnet, die an wenigstens einem Ende ballig ausgeführt ist, so daß ein Winkelversatzausgleich innerhalb der Dämpfventileinrichtung ermöglicht wird.

Darüberhinaus weichen die Rückschlagventile 37a/b von den bisher beschriebenen Ventilen ab. So erfolgt die Einströmung des Nebenstroms in den Steuerraum 19 radial, so daß die Rückschlagventile eine radiale Wirkbewegung ausführen müssen. Deshalb werden ringförmige elastische Schließkörper eingesetzt, die in Abhängigkeit des zu erwartenden Druckniveaus aus Kunststoff, Gummi oder, bei besonders hohen Drücken, aus einem geschlitzten Metallring bestehen. Diese Ausführungsformen der Rückschlagventile ermöglichen ein nichtlineares Öffnungsverhalten in Einströmrichtung, das bei der Abstimmung des Schwingungsdämpfers durchaus vorteilhaft sein kann. Nebenbei reduzieren sich die Teile, insbesondere die Anzahl der bewegten Teile.

Unter Ausnutzung der schon zu Figur 5 erwähnten Vorteile bezüglich des Einsatzes eines Überdruckventils ist bei dem Überdruckventil 91 eine Trennung vom Rückschlagventil 37a vorgenommen worden. Dadurch reduziert sich der Bauaufwand für das Überdruckventil auf eine oder mehrere Tellerfedern, die am Hauptstufenventilkörper verspannt sind.

Ein weiterer wesentlicher Unterschied zu den beschriebenen Varianten, insbesondere der Fig. 4, liegt darin, daß die beiden Schließfedern 45a,45b aufgrund ihrer besonderen Anordnung keine Abhängigkeiten der Federkräfte für die Hauptstufenventilkörper 21a,21b mit sich bringen. Eine Federführungshülse 45c, die ortsfest zum Dämpfventilzwischenkörper 9 angeordnet ist, dient als Abstützungsorgan für die beiden Federn, so daß sich die Federkräfte nicht gegenseitig beeinflussen. In dieser Darstellung ist die Vorspannkraft der Schließfeder 45a um ein Mehrfaches höher als die der Schließfeder 45b, erfahrungsgemäß etwa um den Faktor 4, so daß die Schließfeder 45a die Lage der Federführungshülse 45c auf einem Absatz 45d des Dämpfventilgehäuses 5 definiert. Alternativ kann die Federführungshülse 45c auch zwischen einem Dämpfventilkopfkörper 7 und dem Dämpfventilzwischenkörper 9 verspannt sein. Die Schließfedern 45 greifen über Abstützkörper 71a/b an die Hauptstufenventilkörper 21a/b an, wobei insbesondere der Abstützkörper 71b für das Rückschlagventil 37b über seine Ringkontur eine Führungsfunktion übernimmt.

Bei der Dämpfventileinrichtung 1 ist zwischen den einander zugewandten Seiten der Dämpfventilkopfkörper 7 eine größere Teilemenge in Reihe angeordnet, die durch ihre Toleranzabweichungen die Vorspannlängen der Schließfedern 45 maßgeblich beeinflussen. Daraus können nennenswerte Dämpfkraftstreuungen entstehen, die dadurch abgebaut werden, indem man bei der Montage die Funktion der Dämpfeinrichtung 1 überprüft und den Abstand der beiden Dämpfventilkopfkörper 7 soweit verringert, bis die Vorspannlänge der Federn 45 eingestellt ist. Zu diesem Zweck wird mindestens einer der Dämpfventilkopfkörper 7 relativ zu einem Mantelrohr 5a axial gegen den Dämpfventilzwischenkörper 9 verschoben, so daß dieser eine Verkürzung seiner Axiallänge erfährt. Dazu ist der Dämpfventilzwischenkörper 9 aus einem plastisch verformbaren Material, beispielsweise Aluminium, gefertigt. Ist die korrekte Einstellung erfolgt, so wird das Mantelrohr 5a mit dem Dämpfventilkopfkörper 7, beispielsweise über eine Verstemmung, verbunden.

Der Dämpfventilzwischenkörper 9 wird über Zentrierungen 7z des Dämpfventilkopfkörpers 7 geführt. Des weiteren stützt sich das Mantelrohr 5a radial an den Umfangsflächen 7m, so daß der Ringraum 11 zwischen dem Mantelrohr 5 und dem Dämpfventilzwischenkörper 9 als Verbindungskanal 11 für den Hauptstrom zur Verfügung steht.

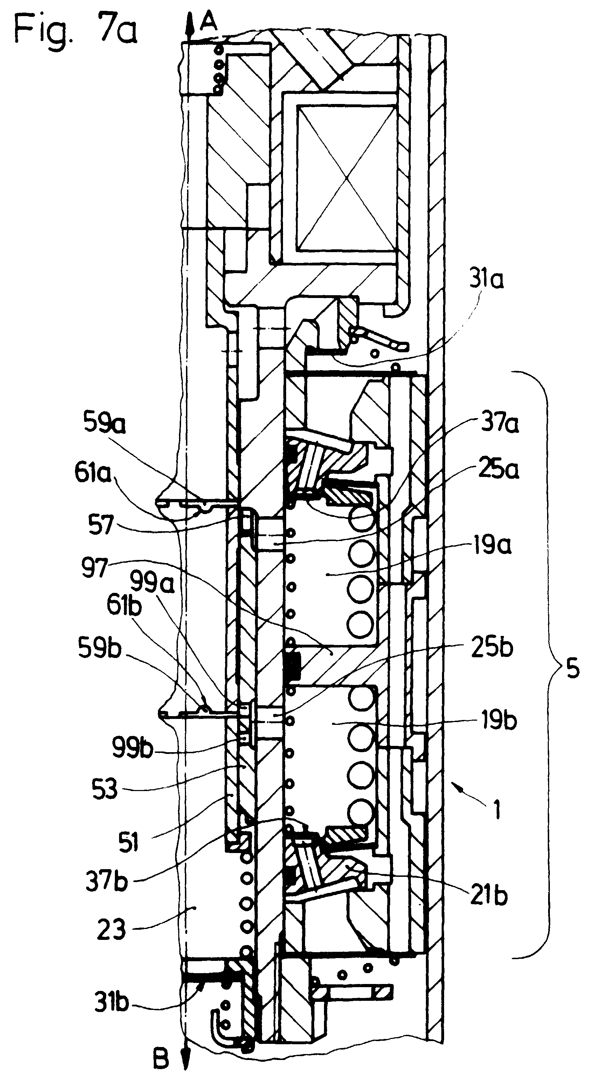

Die Fig. 7a bis 7d zeigen eine Dämpfventileinrichtung 1, die zwei Steuerräume 19a/b besitzt, die von einem gemeinsamen Anker 51 angesteuert werden. Die Steuerräume 19a/b innerhalb des Dämpfventilgehäuses 5 werden durch einen hydraulisch dichten Zwischenboden 97 getrennt. Innerhalb des Ankers sind Aussparungen 59a/b eingearbeitet, die wiederum durch Anformungen 61a/b axial vergrößert werden. Der sonstige Aufbau entspricht im wesentlichen der Fig. 2. Der Anker 51 bildet zusammen mit der Hülse 53 Voröffnungsquerschnitte, die zwischen dem Vorraum 23 und den radialen Strömungsquerschnitten 25 wirksam sind. Die Hülse 53 weist axial beabstandete Schaltbohrungen 99a/b und Ausklinkungen 57 auf, die jeweils dem Steuerraum 19a bzw. 19b zugeordnet sind.

In der Fig. 7a nimmt der Anker 51 bezüglich der Hülse 53 eine Schaltstellung ein, bei der die Ausklinkung 57 nur mit der Anformung 61a zur Überdeckung kommt, so daß ein kleiner Voröffnungsquerschnitt vorliegt. Dabei befindet sich die Ausformung 61b mit der Aussparung 59b in ihrem gesamten Querschnitt innerhalb der Schaltbohrungen 97a. Diese Schaltstellung bedeutet für eine Hubbewegung der Dämpfventileinrichtung 1 in Richtung A, daß das Dämpfmedium aus dem Steuerraum 19a abflußgesteuert wird. Das Dämpfmedium kann durch die Aussparungen 59b und Anformungen 61b über die Schaltbohrungen 99a zwar in den Steuerraum 19a einfließen, doch verhindert ein Rückschlagventil 37b den Abfluß, so daß der Hauptstufenventilkörper 21b den Steuerraum 19b verschließt. Der Nebenstrom aus dem Steuerraum 19a kann durch das Rückschlagventil 31b über den Vorraum 23 abfließen.

In Hubrichtung B der Dämpfventileinrichtung 1 fließt der Nebenstrom durch den Steuerraum 19b und die Schaltbohrungen 99a in den gemeinsamen Querschnitt der Aussparungen 59b und den Anformungen 61 in den Vorraum 23. Ein Kurzschluß über den Steuerraum 19a wird durch das Rückschlagventil 37a verhindert. Der Abfluß aus dem Vorraum 23 erfolgt über das Rückschlagventil 31a. Es liegt eine weiche Grundeinstellung vor, die jedoch zunehmend härter wird, je größer die Überdeckung zwischen der Aussparung 59a mit der Ausklinkung 57 eingestellt wird.

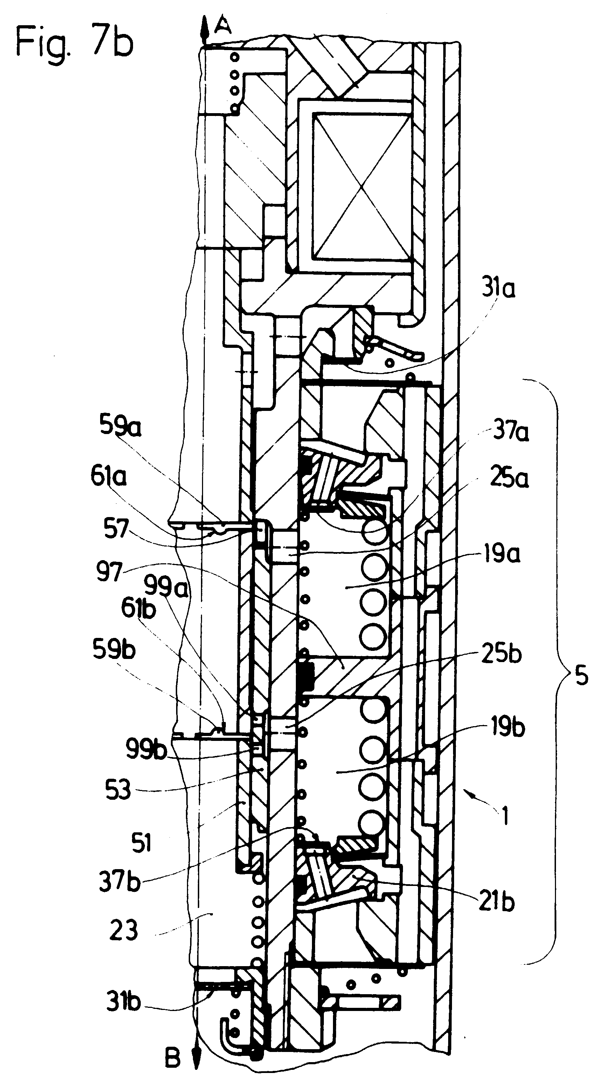

Die Fig. 7b zeigt die Extremschaltstellung zwischen der Aussparung 59a bzw. Anformung 61a und der Ausklinkung 57 sowie der Aussparung 59b und der Anformung 61b mit den Schaltbohrungen 99a. In dieser Ankerstellung liegt in Hubrichtung A die weichste und in Zugrichtung B die härteste Kennlinie vor.

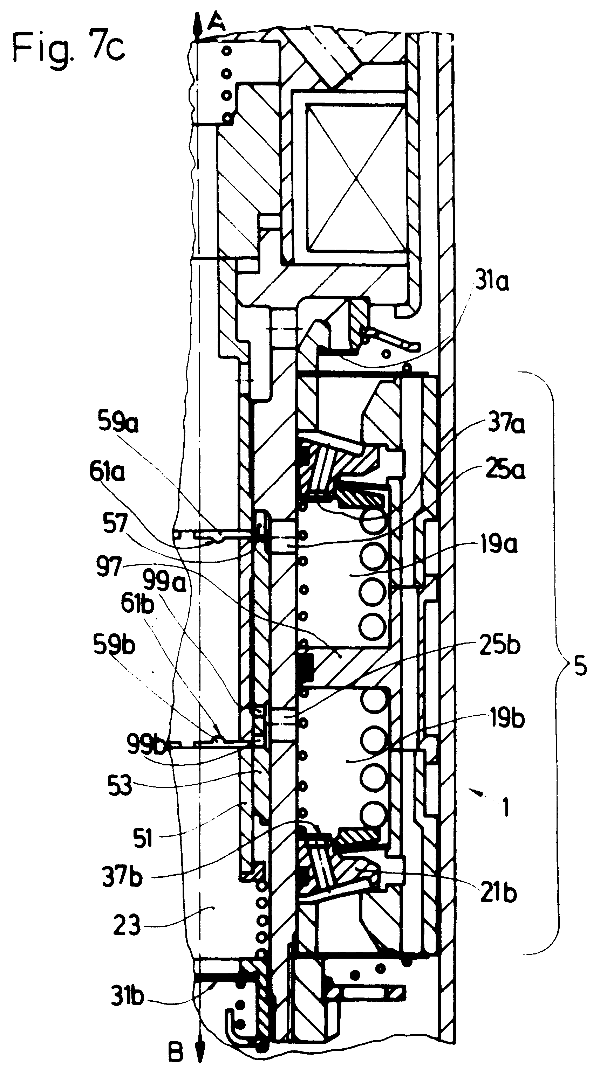

In der Fig. 7c findet der Abfluß des Steuerraums 19b stets über die Schaltbohrungen 99b statt. Die Größe der Überdeckung zwischen den Ausklinkungen 57 und den Aussparungen 51a und 51b bestimmt die Dämpfkraft. Ebenso erfolgt die Dämpfkrafteinstellung über die Schaltbohrungen 99b mit den Aussparungen 59b und den Anformungen 61b. Die Überdeckung bzw. Voröffnungsquerschnitte werden bei der Ankerbewegung gleichsinnig verändert. Für die Dämpfkrafteinstellung bedeutet das, daß bei einer Voröffnungsvergrößerung die Dämpfkrafteinstellung in Zug- und in Druckrichtung gleichmäßig in Richtung einer weicheren Dämpfkraft verstellt wird. Für eine Verstellung tendenziell zu einer härteren Dämpfkraftkennlinie werden beide Voröffnungen verringert.

Über die beiden Schaltbohrungen 99a/b bzw. Schaltbohrungsgruppen, wenn eine Anzahl von Schaltbohrungen angeordnet ist, werden zwei Grundeinstellungen der Dämpfventileinrichtung 1 realisiert, die jeweils eine stufenlose Verstellung der Dämpfkraft zwischen zwei extremen Einstellungen "hart" und "weich" für jede Hubrichtung ermöglicht.

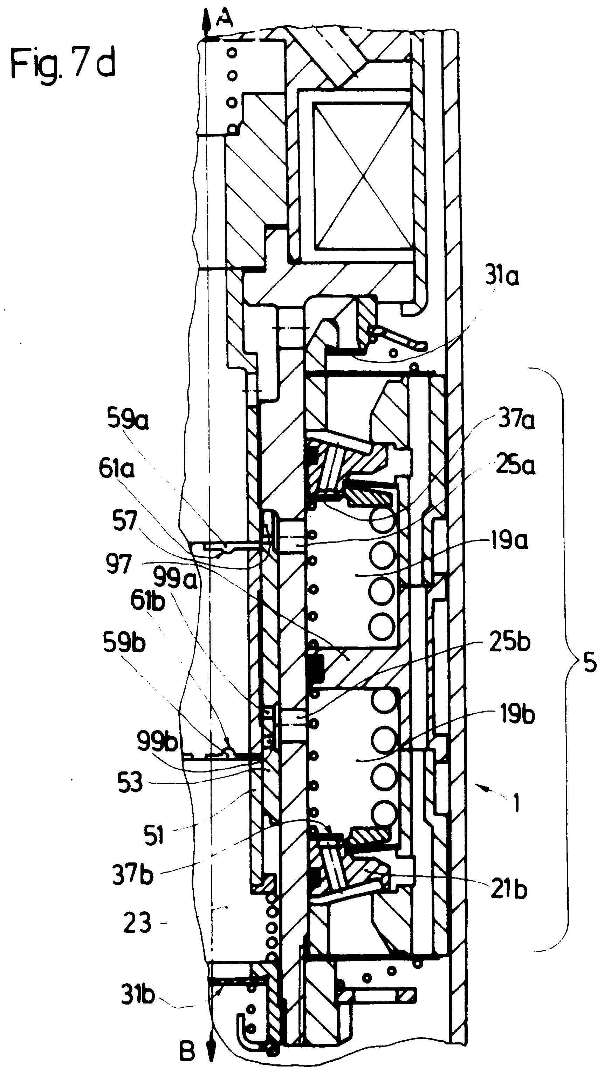

Die Fig. 7d zeigt den Anker in der Schaltstellung, die für beide Hubrichtungen die härteste Einstellung bedeutet.

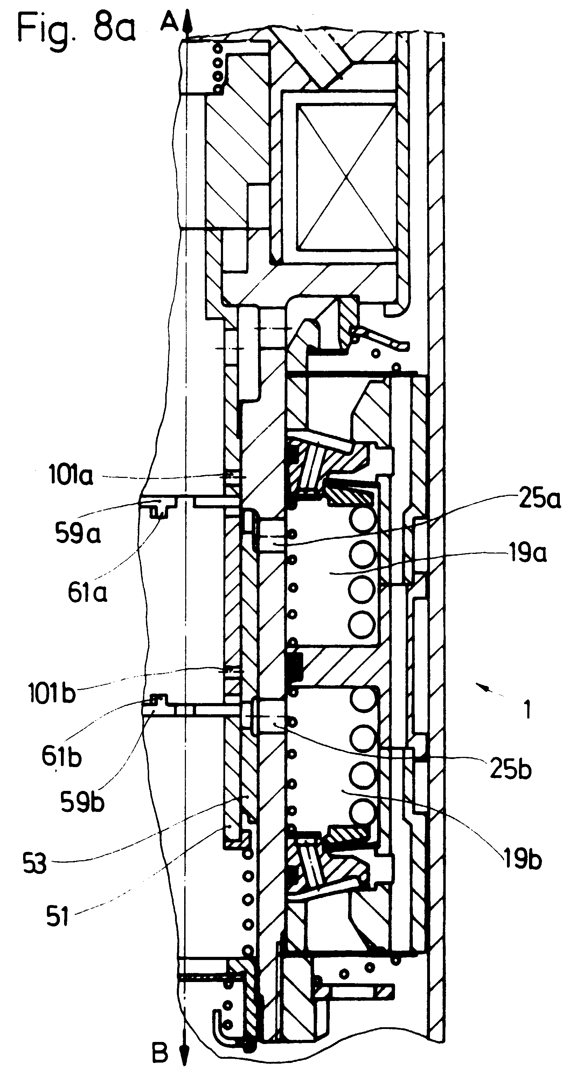

Die Fig. 8a bis 8d zeigen einen gestuft schaltbaren Anker 51, der in dieser Ausführung zwei Grundeinstellungen ermöglicht in Verbindung mit jeweils zwei Dämpfkraftkennlinien. Die Dämpfkrafteinstellung wird wie bei den vorherigen Figuren durch die Überdeckung zwischen den Anker 51 und der Hülse 53 vorgenommen. Gegenüber den Fig. 7a bis 7d besteht der Unterschied, daß der Anker 51 neben den Aussparungen 59a und 59b und den Anformungen 61a/b noch jeweils eine oder mehrere Konstantdrosseln 101a/b besitzt. In der Hülse 53 ist für jeden Steuerraum 19a/b eine Verlängerung der radialen Strömungsverbindungen 25a/b eingearbeitet.

Die allgemeine Funktionsweise der Dämpfventileinrichtung kann aus den Fig. 7a bis 7d übernommen werden. Als wichtigster Unterschied ist die gestufte Verstellung der Dämpfventileinrichtung 1 zu nennen. In der Fig. 7a ist für die Hubbewegung in Richtung A die härteste Dämpfkrafteinstellung eingestellt, da der Voröffnungsquerschnitt für den Steuerraum 19a nur von den Anformungen 61a bestimmt wird. Für die entgegengesetzte Hubbewegung steht dem Steuerraum 19b die maximale Voröffnung, gebildet von der Aussparung 59, zur Verfügung, womit sich die weiche Dämpfkrafteinstellung verbindet.

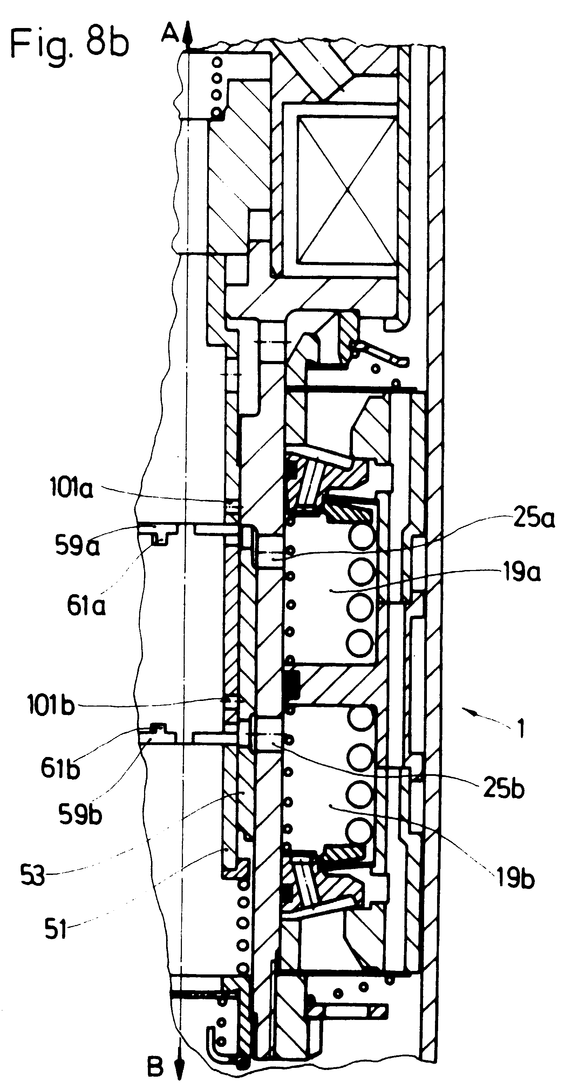

Die Fig. 8b zeigt eine Ankerstellung, die für beide Hubrichtungen die maximale Voröffnung bedeutet, so daß auch für beide Hubrichtungen die weichste Dämpfkraft eingestellt ist.

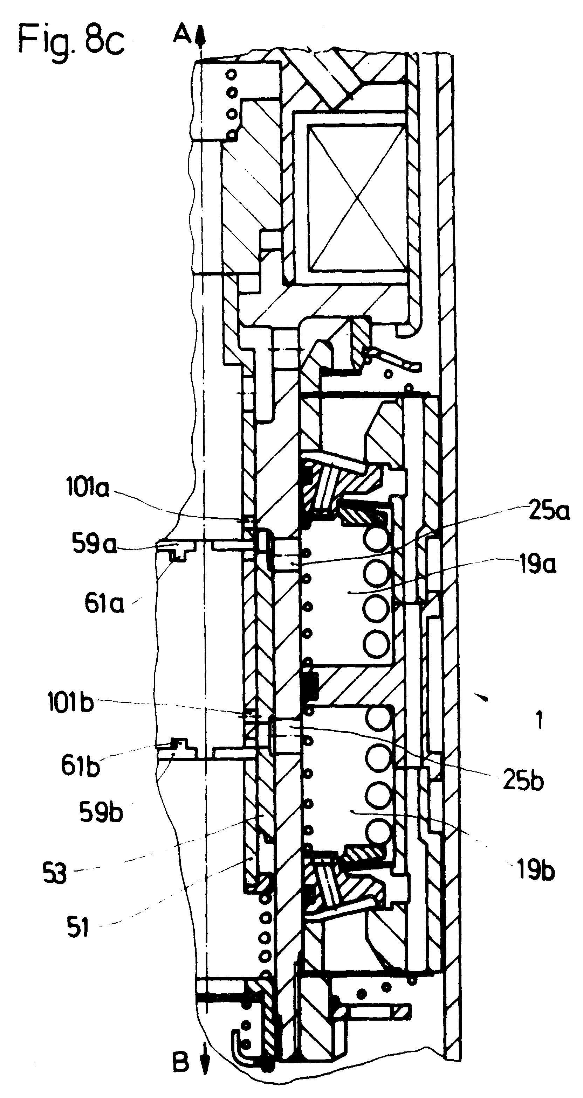

In der Fig. 8c überdeckt sich die Aussparung 59a mit dem Fortgang der radialen Strömungsverbindung 25a, während für die radiale Strömungsverbindung 25b nur die Anformungen 61b als Abschluß bzw. Voröffnung benutzt werden können. Folglich befindet sich die Dämpfventileinrichtung in Hubrichtung A in der weichsten und in Hubrichtung B in der härtesten Dämpfkrafteinstellung.

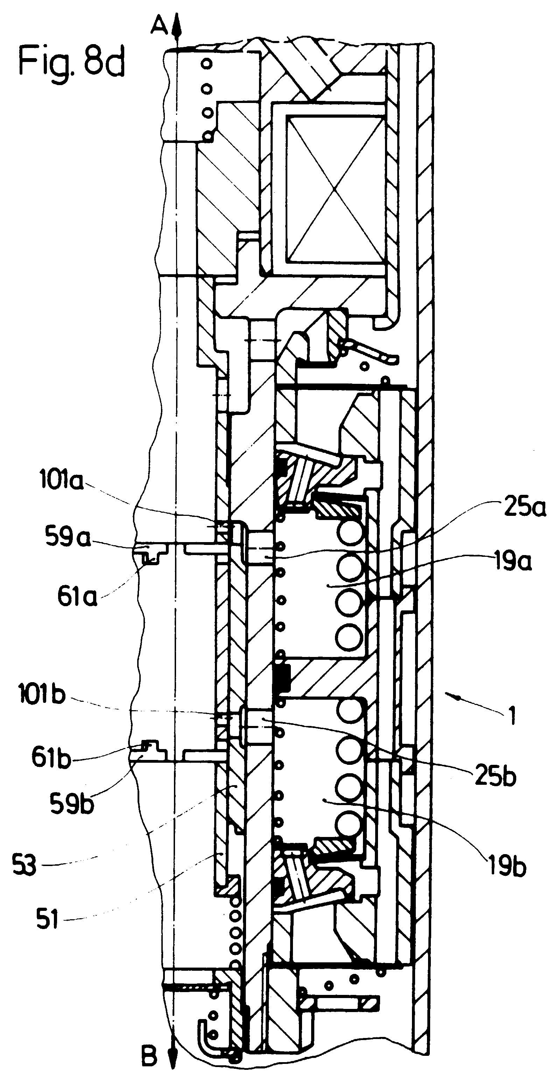

Sinngemäß ergibt sich für die Fig. 8d für beide Durchströmungsrichtungen die härteste Dämpfeinstellung, da nur die Konstantdrosseln 101a und 101b den Voröffnungsquerschnitt bestimmen.

Die Stellung des Ankers 51 für die Dämpfventileinstellung beider Hubrichtungen auf hart wurde bewußt so gelegt, daß der Anker 51 den größten Weg und damit den größten Strom für den Ringmagneten ausführt bzw. aufnimmt. Diese Ankerstellung wird im täglichen Fahrbetrieb eines Fahrzeuges nur sehr selten benötigt. Durch diese geschickte Anordnung der Schaltstellungen kann indirekt die Stromversorgung des Ringmagneten positiv beeinflußt werden.

Der Vorteil der gestuften Dämpfventilausführung gegenüber der stufenlosen ist darin zu sehen, daß die Konstantdrosseln 101a und 101b die zulässigen Toleranzen innerhalb der Dämpfventileinrichtung vergrößern lassen. Es ist vollkommen unerheblich, ob die Konstantdrosseln einige Zehntel Millimeter verschoben innerhalb der Fortsetzung der radialen Strömungswege 25 ihren Schaltpunkt einnimmt. Die Voröffnung wird einzig von dem Querschnitt der Konstantdrosseln gebildet.

Die Darstellung der Fig. 7 und 8 können selbstverständlich mit den Überdruckventilen entsprechend den Fig. 4, 5 oder 6 ergänzt werden. Ebenso beschränkt sich die Anwendung der Dämpfventileinrichtung 1 nicht nur auf ein Kolbenventil sondern kann selbstverständlich auch in einem Bypass eines Schwingungsdämpfers vorgesehen sein.

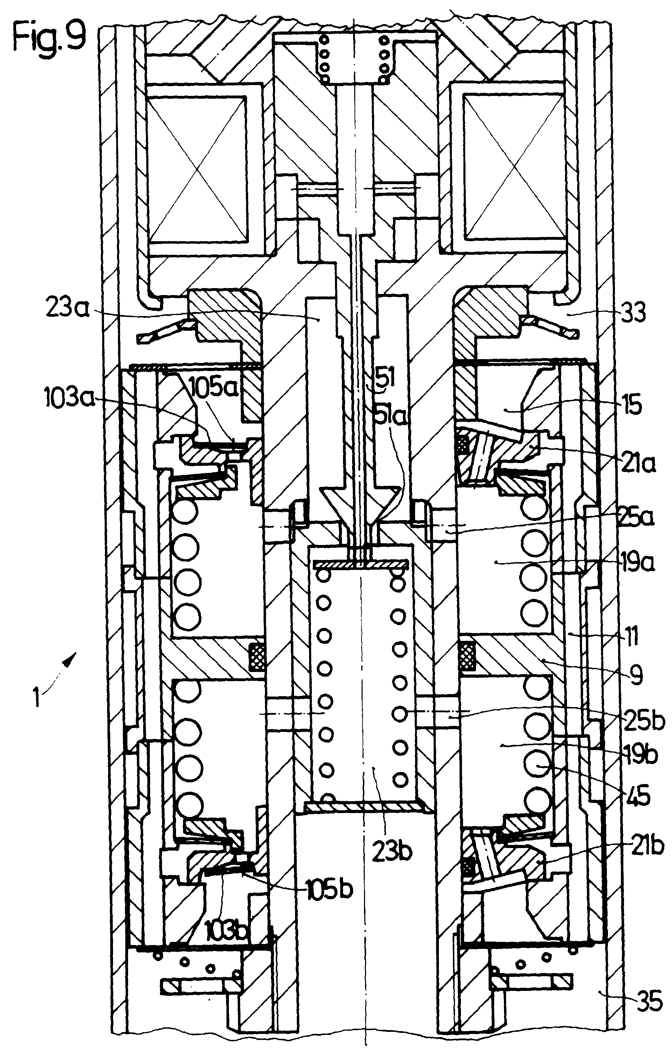

In der Fig. 9 wird eine Dämpfventileinrichtung 1 gezeigt, die wie die Figuren 7 und 8 ebenfalls einen Steuerraum aufweist, der in zwei Steuerräume 19a/19b aufgeteilt ist. Die beiden Steuerräume 19a/19b sind über die Vorräume 23a/23b sowie dem Vorstufenventil, das vom Anker 51 gebildet wird, miteinander verbunden.

Die Funktion läuft in der Fig. 9 in Zugrichtung so ab, daß sich der Volumenstrom aus dem Arbeitsraum 33 in den Nebenstrom und den Hauptstrom aufteilt, wobei der Nebenstrom durch den Hauptstufenventilkörper 21a in den Steuerraum 19a einströmt und sich ein Druck aufbaut, der den Hauptstufenventilkörper 21a beaufschlägt. Der Nebenstrom setzt sich durch die radiale Strömungsverbindung 25a zum Vorstufenventil in der Ausführung eines Sitzventiles 51a fort. Selbstverständlich kann auch ein Drehschieberventil entsprechend der Figur 1 eingesetzt werden. In Abhängigkeit der Öffnungsstellung des Sitzventils 51a baut sich der Druck auf, der auf den Hauptstufenventilkörper 21a eine Schließkraft bewirkt. Dabei stellt sich durch die Ausgestaltung der ventilöffnenden und ventilschließenden Flächen am Hauptstufenventilkörper entsprechend der Beschreibung nach Fig. 1b ein Drosselquerschnitt in die Verbindungskanäle und weiter in den Arbeitsraum 35 ein, der eine Dämpfkraft am Hauptventil bewirkt.

Der Nebenstrom fließt über den Vorraum 23b und die radiale Strömungsverbindung 25b in den Steuerraum 19b und mündet über den Hauptstufenventilkörper 21b im Arbeitsraum 35. Die Durchströmung bei der Druckdämpfung, wenn das Dämpfmedium durch die Dämpfventileinrichtung 1 vom Arbeitsraum 35 in den Arbeitsraum 33 fließt, erfolgt exakt über dieselben Räume und Verbindung in umgekehrter Fließrichtung für den Neben- und den Hauptstrom.

In der linken Zeichnungshälfte verfügen die Hauptstufenventilkörper über richtungsabhänigig wirksame Durchlaßventile 103a,103b, die jeweils mindestens einen Drosselquerschnitt 105a,105b aufweisen, die in Einströmrichtung der zugehörigen Steuerräume wirken. In Ausströmrichtung aus den Steuerräumen heben die Durchlaßventile, die aus Tellerfedern gebildet werden, von ihren Sitzflächen ab, und geben einen größeren Querschnitt durch die Hauptstufenventilkörper 21a/21b frei. Dadurch wird erreicht, daß der Drosselquerschnitt in Einströmrichtung in einen derSteuerräume 19 kleiner ist als in Ausströmrichtung bezogen auf eine Durchströmungsrichtung der Dämpfventileinrichtung.

Die Durchlaßventile 103 sind, wie aus der Funktionsbeschreibung zu rechten Zeichnungshälfte zu entnehmen ist, nicht notwendig, sondern bieten sich in den Anwendungsfällen an, in sich denen eine Dämpfkraftabstimmung besonders schwierig gestaltet. Das Verhältnis vom Drosselquerschnitt, beispielsweise 105a, in Einströmrichtung in den Steuerraum 19a zum Abflußquerschnitt aus dem Steuerraum 19b bestimmt das Maß für die Veränderbarkeit der Dämpfkraft durch das Vorsteuerventil. In umgekehrter Durchströmungsrichtung ist dieses Verhältnis ebenfalls wirksam.

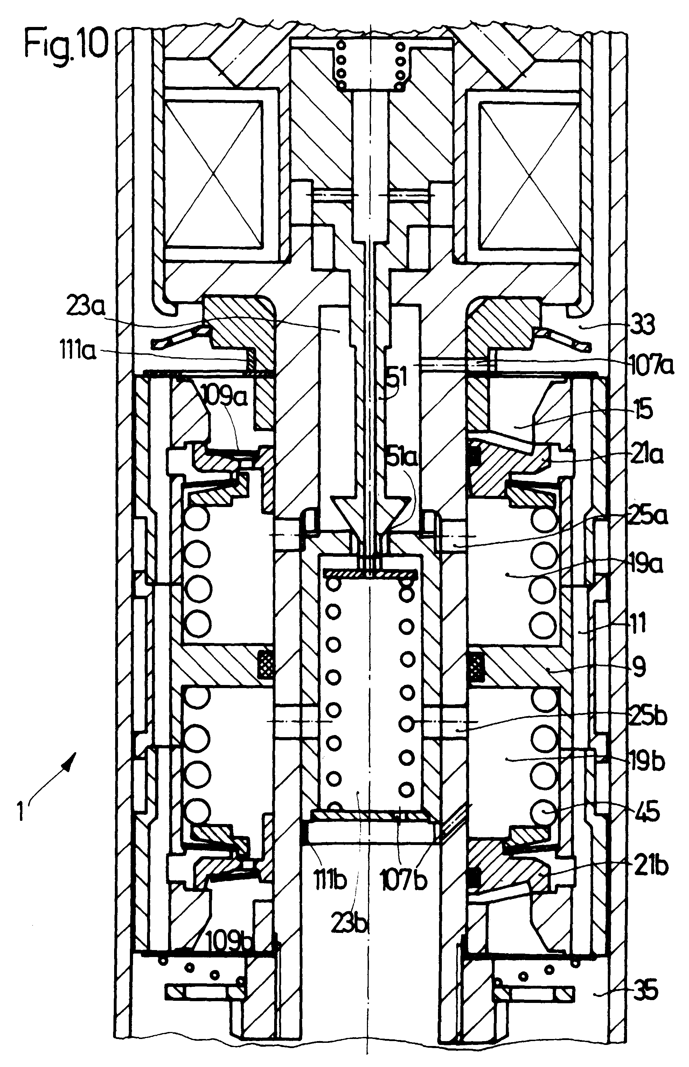

Die Figur 10 entspricht bis auf die Ausgestaltung der Hauptstufenventilkörper exakt der Ausführung nach der Figur 9. Abweichend sind Drosselquerschnitte 107a/107b, die den Nebenstrom dem Vorstufenventil zuführen getrennt von den Hauptstufenventilen 21a/21b ausgeführt. Zur Einstellung des Verhältnisses der Querschnitte für den Nebenstrom in Zu- und Abflußrichtung der Steuerräume 19a/19b kommen einfache Rückschlagventile 109a/109b zur Anwendung. Alternativ kann auch ein Schließring ähnlich dem Schließring 37a nach Figur 6 anstatt der Rückschlagventile 109a/109b verwendet werden. Dabei kann der Schließring 111a/111b derart ausgeführt sein, daß er in Einströmrichtung einen kleineren Durchlaßquerschnitt aufweist als in Ausströmrichtung in den Vorraum 23a bzw. den Steuerraum 19b mit dem Vorteil, daß die Hauptstufenventilkörper 21a/21b als Vollkörper ausgeführt sein können.

Für beide Versionen nach den Fig. 9 und 10 gilt, daß die den Vorraum 23a/23b bildende Hülse fest mit dem Kolbenstangenzapfen verbunden ist. Des weiteren bilden die Vorräume 23a/23b jeweils mit den Steuerräumen 19a/19b einen gemeinsamen hydraulischen Wirkraum, da die Querschnitte der radialen Strömungsverbindungen 25a/25b im Verhältnis zu den übrigen Nebenstromquerschnitten derart ausgeführt, daß sich in den wirkmäßig
zusammengehörigen Vorräumen/Steuerräumen im wesentlichen derselbe Betriebsdruck einstellt.

## Patentansprüche

1. Schwingungsdämpfer mit verstellbarer Dämpfkraft, umfassend ein dämpfmediumgefülltes Druckrohr, in dem ein Kolben an einer axial beweglichen Kolbenstange einen Arbeitsraum in einen kolbenstangenseitigen und einen kolbenstangenfernen unterteilt, wobei ein Dämpfmittelstrom zwischen den beiden Arbeitsräumen vorliegt, der sich in einen Hauptstrom und einen Nebenstrom aufteilt, eine Dämpfventileinrichtung, bestehend aus einem Dämpfventilkörper, mit einem Hauptstufenventil pro Stromrichtung, das durch jeweils einen Hauptstufenventilkörper gebildet wird, und einem Vorstufenventil, das die Hauptstufenventile ansteuert, einen regelbaren Aktuator, der eine Strömverbindung zwischen einem Steuerraum und einem Arbeitsraum beeinflußt, dadurch gekennzeichnet, daß der Steuerraum (19;19a;19b) axial von dem ersten und dem zweiten federkraftbeaufschlagten Hauptstufenventilkörper (21a;21b) begrenzt wird, wobei sich der erste Hauptventilstufenkörper beim Anströmen aus der geschlossenen Ventilstellung in eine Öffnungsstellung axial in den Steuerraum (19;19a;19b) auf den zweiten Hauptstufenventilkörper zubewegt, der von dem Dämpfmedium in der geschlossenen Ventilstellung gehalten wird und sich bei umgekehrter Anströmrichtung der zweite Hauptstufenventilkörper aus der geschlossenen Ventilstellung in eine Öffnungsstellung axial in Richtung des sich in der geschlossenen Ventilstellung befindlichen ersten Hauptstufenkörpers bewegt.

2. Schwingungsdämpfer entsprechend dem Oberbegriff von Patentanspruch 1, dadurch gekennzeichnet, daß das Hauptstufenventil vom Hauptstrom und das Vorstufenventil (39, 51a) vom Nebenstrom in beiden Strömungsrichtungen durchströmt wird.

3. Schwingungsdämpfer nach den Ansprüchen 1 und 2, dadurch gekennzeichnet, daß innerhalb des Dämpfventilkörpers (7) der Nebenstrom des Dämpfmediums durch den Steuerraum (19;19a;19b) und der Hauptstrom durch Verbindungskanäle (11a;11b) radial außerhalb des Steuerraums (19;19a;19b) verlaufen und ein von dem Aktuator gebildeter Vorraum (23) konzentrisch zum Steuerraum (19;19a;19b) angeordnet ist, wobei zwischen Vorraum (23) und einem Arbeitsraum (33;35) in mindestens eine Strömungsrichtung eine Verbindung besteht und dabei eine radiale Strömungsverbindung (25), die vom Aktuator beeinflußt wird, zwischen dem Steuerraum (19;19a;19b) und dem Vorraum (23) vorgesehen ist.

4. Schwingungsdämpfer nach den Ansprüchen 1 und 2, dadurch gekennzeichnet, daß innerhalb des Dämpfventilkörpers (5) zumindest für eine Durchströmungsrichtung vorgesehen ist, daß der Haupt- und der Nebenstrom eine gemeinsame Zuströmöffnung (15a;15b) besitzen.

5. Schwingungsdämpfer nach Anspruch 1, dadurch gekennzeichnet, daß die Dämpfventileinrichtung (1) mit Rückschlagventilen (29a;29b;31a;31b;37a;37b) für den Haupt-und/oder Nebenstrom derart ausgerüstet ist, daß für beide Durchströmungsrichtungen des Steuerraumes (19;19a;19b) die Dämpfkraftverstellung durch Steuerung des Abflusses des Nebenstroms zwischen dem Steuerraum (19;19a;19b) und dem Vorraum (23) erfolgt.

6. Schwingungsdämpfer nach Anspruch 1, dadurch gekennzeichnet, daß die Dämpfventileinrichtung mit Rückschlagventilen (29a;29b;31a;31b;37a;37b) für den Haupt- und/oder Nebenstrom derart ausgerüstet ist, daß für eine Durchströmungsrichtung des Steuerraumes die Dämpfkraftverstellung durch Steuerung des Zuflusses und für die andere der Abfluß des Nebenstroms zwischen dem Steuerraum (19;19a;19b) und dem Vorraum (23) erfolgt.

7. Schwingungsdämpfer nach den Ansprüchen 1 oder 2, dadurch gekennzeichnet, daß die Hauptstufenventilkörper (21a/21b) Drosselbohrungen aufweisen, durch die der Nebenstrom in den Steuerraum (19/19a/19b) einströmt.

8. Schwingungsdämpfer nach den Ansprüchen 1 oder 2, dadurch gekennzeichnet, daß die Bohrungen zu den Steuerräumen (19a/19b) bzw. dem Vorraum (23/23a/23b) richtungsabhängig wirksame Durchlaßventile (103/105/111) aufweisen, die in Ausströmrichtung der jeweiligen Räume einen größeren Drosselquerschnitt freigeben als in Einströmrichtung.

9. Schwingungsdämpfer nach den Ansprüchen 2 oder 4, dadurch gekennzeichnet, daß die Hauptstufenventilkörper (21a;21b) mit Rückschlagventilen (37a;37b) versehen sind, die in Einströmrichtung des Nebenstroms in den Steuerraum (19;19a;19b) öffnen.

10. Schwingungsdämpfer nach Anspruch 8, dadurch gekennzeichnet, daß mindestens eines der Rückschlagventile (37a;37b) durch einen elastisch verformbaren Schließring gebildet wird.

11. Schwingungsdämpfer nach Anspruch 8, dadurch gekennzeichnet, daß die Hauptstufenventile richtungsabhängige Dämpfkraftkennlinien besitzen, die durch mehrere Federn (45a;45b) gebildet werden, wobei sich an einem Hauptstufenventilkörper (21a) die Federn (45a;45b) gemeinsam abstützen und am anderen Hauptstufenventilkörper (21b) ein Anteil der Federn (45a;45b) angreift, so daß sich die Federkräfte für den Hauptstufenventilkörper (21a) addieren und für den anderen (21b) ein Anteil der Federkräfte wirksam ist.

12. Schwingungsdämpfer nach Anspruch 1, dadurch gekennzeichnet, daß die Hauptstufenventile richtungsabhängige Dämpfkraftkennlinien besitzen, die durch mehrere Federn (45a;45b) gebildet werden, wobei sich an einem Hauptstufenventilkörper (21a) die Feder (45a) abstützt und am Hauptstufenventilkörper (21b) die Feder (45b) abstützt, wobei beide Federn (45a;45b) an einer relativ zum Dämpfventilzwischengehäuse (9) ortsfesten Federführungshülse (45c) wechselseitig angreifen.

13. Schwingungsdämpfer nach den Ansprüchen 1 oder 2, dadurch gekennzeichnet, daß die Dämpfventileinrichtung (1) mindestens ein Druckbegrenzungsventil aufweist.

14. Schwingungsdämpfer nach Anspruch 5 oder 13, dadurch gekennzeichnet, daß die Rückschlagventile für die Hauptströme mit Druckbegrenzungsventilen (73) versehen sind.

15. Schwingungsdämpfer nach Anspruch 14, dadurch gekennzeichnet, daß das Rückschlagventil für den Hauptstrom aus einem durch eine Feder (81) auf den Dämpfventilkörper (5) vorgespannten Rückschlagventilkörper (75) besteht mit einem Verbindungsquerschnitt (77) zu beiden Seiten des Ventilkörpers, der wiederum durch einen federbelasteten Schließkörper (79) abgedeckt ist, so daß in einer Durchströmrichtung des Hauptstromes der Schließkörper (79) und in anderer Richtung der Rückschlagventilkörper (75) vom Dämpfventilkörper abhebt.

16. Schwingungsdämpfer nach Anspruch 13, dadurch gekennzeichnet, daß das Überdruckventil den Nebenstrom freigibt, indem ein Schließkörper abhebt und das Rückschlagventil für den Steuerraum (19) umgeht.

17. Schwingungsdämpfer nach den Ansprüchen 2 oder 5, dadurch gekennzeichnet, daß die Rückschlagventile (37a;37b) für die Nebenströme mit Druckbegrenzungsventilen (91) ausgestattet sind.

18. Schwingungsdämpfer nach Anspruch 5, dadurch gekennzeichnet, daß das Überdruckventil (91) für den Nebenstrom innerhalb des Steuerraums (19;19a;19b) angeordnet ist, wobei das Überdruckventil (91) und das Rückschlagventil (37a;37b) als Kombinationsbauteil ausgeführt und als zwei Scheibenkörper miteinander verspannt sind, die wechselseitig von ihren Ventilsitzflächen abheben.

19. Schwingungsdämpfer nach einem beliebigen Anspruch 1 bis 17, dadurch gekennzeichnet, daß der Hauptventilkörper aus zwei Einzelkörper (83;87) besteht, wobei der eine (83) den Führungskörper und der andere den Sitzkörper (87) darstellt.

20. Schwingungsdämpfer nach den Ansprüchen 1 oder 2, dadurch gekennzeichnet, daß das Vorstufenventil stets teilgeöffnet ist, so daß das Hauptstufenventil (21a;21b) gleichzeitig ein Druckbegrenzungsventil darstellt.

21. Schwingungsdämpfer nach Anspruch 20, dadurch gekennzeichnet, daß die hydraulisch wirksamen ventilöffnenden Flächen des Hauptstufenventils größer sind als die ventilschließenden.

22. Schwingungsdämpfer nach den Ansprüchen 1 oder 2, dadurch gekennzeichnet, daß der Aktuator aus einem Stellmotor in Verbindung mit einem Drehschieber (39) besteht.

23. Schwingungsdämpfer nach Anspruch 1 oder 2, dadurch gekennzeichnet, daß der Aktuator aus einem Ringmagneten (49) in Verbindung mit einem axial verschiebbaren Anker (51) besteht.

24. Schwingungsdämpfer nach Anspruch 23, dadurch gekennzeichnet, daß der verschiebbare Anker (51) ein Sitzventil darstellt.

25. Schwingungsdämpfer nach einem der Ansprüche 23 oder 24, dadurch gekennzeichnet, daß innerhalb des Ankers (51) eine Koppelstange (51c) angeordnet ist, die an wenigstens einem Ende ballig ausgeformt ist und mit einer angepaßten Gegenfläche einen Winkelversatzausgleich bildet.

26. Schwingungsdämpfer nach den Ansprüchen 22 oder 23, dadurch gekennzeichnet, daß der Aktuator stufenlos verstellbar ist.

27. Schwingungsdämpfer nach den Ansprüchen 22 oder 23, dadurch gekennzeichnet, daß der Aktuator gestuft verstellbar ist.

28. Schwingungsdämpfer nach Anspruch 1, dadurch gekennzeichnet, daß die Dämpfventileinrichtung (1) zwei getrennte Steuerräume (19a;19b) besitzt, wobei pro Durchströmungsrichtung ein Steuerraum (19a;19b) durchströmt wird und die Verbindungen zwischen den Steuerräumen (19a;19b) und dem Vorraum (23) von einem gemeinsamen Aktuator gesteuert werden, so daß insgesamt zwei Grundeinstellungsbereiche der Dämpfventileinrichtung (1) entstehen, wobei der eine eine für beide Durchströmungsrichtungen gleichsinnige Dämpfkraftverstellung und der andere eine wechselseitige Dämpfkraftverstellung mit sich bringt.

29. Schwingungsdämpfer nach Anspruch 1, dadurch gekennzeichnet, daß die Dämpfventileinrichtung (1) zwei getrennte Steuerräume (19a;19b) besitzt, wobei pro Durchströmungsrichtung ein Steuerraum (19a;19b) durchströmt wird und die Verbindung zwischen den Steuerräumen (19a;19b) und dem Vorraum (23) von einem gemeinsamen Aktuator gesteuert werden, so daß pro Durchströmungsrichtung der Dämpfventileinrichtung (81) mindestens zwei verschiedene Dämpfkraftkennlinien vorliegen, die in Abhängigkeit der Aktuatorstellung für die beiden Durchströmungsrichtungen gleichsinnig oder wechselsinnig eingestellt werden können.

30. Schwingungsdämpfer nach Anspruch 20, dadurch gekennzeichnet, daß die Verbindung zwischen dem Vorraum (23) und dem Steuerraum (19;19a;19b) den Voröffnungsquerschnitt darstellt.

31. Schwingungsdämpfer nach einem der Ansprüche 1 bis 30, dadurch gekennzeichnet, daß das Dämpfventilgehäuse (5) jeweils einen endseitigen Dämpfventilkopfkörper (7) und einen Dämpfventilzwischenkörper (9) umfaßt.

32. Schwingungsdämpfer nach Anspruch 31, dadurch gekennzeichnet, daß die Dämpfventilkopfkörper (7) innerhalb des Dämpfventilgehäuses (5) spiegelbildlich angeordnet sind.

33. Schwingungsdämpfer nach Anspruch 31, dadurch gekennzeichnet, daß konzentrisch zum Dämpfventilzwischenkörper (9) ein Mantelrohr (5a) angeordnet ist und sich mindestens ein Dämpfventilkopfkörper vor seiner Fixierung mit dem Mantelrohr relativ zu diesem verschieben läßt, so daß sich die axiale Baulänge des Dämpfventilzwischenkörpers (9) willkürlich einstellen läßt.

34. Schwingungsdämpfer nach Anspruch 33, dadurch gekennzeichnet, daß die Fixierung zwischen dem Dämpfventilkopfkörper (7) und dem Mantelrohr (5a) mittels einer plastischen Verformung erfolgt.

35. Schwingungsdämpfer nach einem der Ansprüche 1 bis 32, dadurch gekennzeichnet, daß der Dämpfventilkopfkörper (7) und der Dämpfventilzwischenkörper (9) zu einer Baueinheit zusammengefaßt sind, so daß das Dämpfventilgehäuse (5) aus zwei gleichen aber spiegelbildlichen Einzelteilen besteht.

36. Schwingungsdämpfer nach einem beliebigen Anspruch, dadurch gekennzeichnet, daß sich die Hauptstufenventile (21a;21b) an einem der Kolbenstange (3) zugeordneten Zapfenabschnitt (17) zentrieren.

37. Schwingungsdämpfer nach Anspruch 1, dadurch gekennzeichnet, daß die Dämpfventileinrichtung (1) über eine Notbetriebsstellung verfügt, die aus mindestes einer Federanordnung (63) besteht, die den Anker (51) des Aktuators gegen eine Anlagefläche (65) drückt, womit eine mittlere Dämpfkrafteinstellung verbunden ist.

38. Schwingungsdämpfer nach den Ansprüchen 1 oder 2, dadurch gekennzeichnet, daß die Dämpfventileinrichtung (1) über einen Aktuator verfügt, der ein druckausgeglichenes Stellglied (39;51) besitzt.

39. Schwingungsdämpfer nach Anspruch 2, dadurch gekennzeichnet, daß die Dämpfventileinrichtung (1) einen zweigeteilten Steuerraum (19) aufweist, wobei die beiden Steuerraumteile (19a/19b) über das Vorstufenventil (39/51a) verbunden sind.

40. Schwingungsdämpfer nach Anspruch 2, dadurch gekennzeichnet, daß der Zustrom des Nebenstroms über Verbindungsbohrungen (107a/107b) außerhalb der Hauptstufenventilkörper (21a/21b) erfolgt.

## Claims

1. Vibration damper with adjustable damping force comprising a pressure tube filled with a damping medium, in which a piston on an axially movable piston rod divides a working chamber into a piston-rod-end chamber and a piston-rod-remote chamber, a flow of damping medium being present between the two working chambers, divided into a main flow and an auxiliary flow, a damper valve assembly comprising a damper valve body with one main stage valve per direction of flow, which is formed respectively by a main stage valve body and a preliminary stage valve which controls the main stage valve, an adjustable actuator which influences a flow connection between a control chamber and a working chamber, characterised in that the control chamber (19; 19a; 19b) is bounded axially by the first and the second spring-urged main stage valve body (21a; 21b), the first main valve stage body moving, on exposure to flow, from the closed valve position into an open position axially in the control chamber (19; 19a; 19b) towards the second main stage valve body, which is held in the closed position by the damping medium and in the opposite direction of flow the second main stage valve body moves from the closed valve position into an open position axially in the direction of the first main stage body which is present in the closed position.

2. Vibration damper according to the introductory part of claim 1, characterised in that the main stage valve has the main flow passing through it in both directions of flow and the preliminary stage valve (39, 51a) has the auxiliary flow passing through it in both directions.

3. Vibration damper according to claims 1 and 2, characterised in that within the damper valve body (7) the auxiliary flow of the damping medium passes through the control chamber (19; 19a; 19b) and the main flow passes through connecting passages (11a; 11b) radially outside the control chamber (19; 19a; 19b) and an ante-chamber (23) formed by the actuator is arranged concentric with respect to the control chamber (19; 19a; 19b), a connection being present between ante-chamber (23) and a working chamber (33; 35) in at least one direction of flow and thereby a radial flow connection (25) which is influenced by the actuator, is provided between the control chamber (19; 19a; 19b) and the ante-chamber (23).

4. Vibration damper according to claims 1 and 2, characterised in that it is provided within the damper valve body (5) at least for one direction of flow that the main and auxiliary flows have a common inlet opening (15a; 15b).

5. Vibration damper according to claim 1, characterised in that the damper valve assembly (1) is equipped with non-return valves (29a; 29b; 31a; 31b; 37a; 37b) for the main and/or auxiliary flow in such a way that for both directions of flow through the control chamber (19; 19a; 19b) the adjustment of the damping force is achieved by control of the escape of the auxiliary flow between the control chamber (19; 19a; 19b) and the ante-chamber (23).

6. Vibration damper according to claim 1, characterised in that the damper valve assembly is equipped with non-return valves (29; 29b; 31a; 31b; 37a; 37b) for the main and/or auxiliary flow in such a way that for one direction of flow through the control chamber the adjustment of the damping force is achieved by control of the entry and for the other direction the escape of the auxiliary flow between the control chamber (19; 19a; 19b; and the ante-chamber (23).

7. Vibration damper according to claims 1 or 2, characterised in that the main stage valve bodies (21a/21b) have restrictions through which the auxiliary flow passes into the control chamber (19/19a/19b).

8. Vibration damper according to claims 1 or 2, characterised in that the bores to the control chambers (19a/19b) and to the ante-chamber (23/23a/23b) have through-passage valves (103/105/111) which act dependent on direction and which uncover a larger cross-section or area in the direction of flow out of the respective chambers than in the direction of inward flow.

9. Vibration damper according to claims 2 or 4, characterised in that the main stage valve bodies (21; 21b) are provided with non-return valves (37a; 37b) which open in the direction of inward movement of the auxiliary flow into the control chamber (19; 19a; 19b).

10. Vibration damper according to claim 8, characterised in that at least one of the non-return valves (37a; 37b) is formed by an elastically deformable closing ring.

11. Vibration damper according to claim 8, characterised in that the main stage valves have damping force characteristics which are dependent upon direction and which are formed by a number of springs (45a; 45b), whereby on one main stage valve body (21a) the springs (45a; 45b) act in common and on the other main stage valve body (21b) only some of the springs (45a; 45b) act so that for the main stage valve body (21a) the spring forces add together and for the other (21b) a proportion of the spring force is operative.

12. Vibration damper according to claim 1, characterised in that the main stage valves have direction - dependent damping force characteristics formed by a number of springs (45a; 45b), the spring (45a) engaging one main stage valve body (21a) and the spring (45b) engaging the main stage valve body (21b), both springs (45a; 45b) engaging alternately a spring guiding sleeve (45c) which is fixed relative to the damper valve intermediate housing (9).

13. Vibration damper according to claims 1 or 2, characterised in that the damper valve assembly (1) has at least one pressure-limiting valve.

14. Vibration damper according to claim 5 or 13, characterised in that the non-return valves for the main flows are provided with pressure-limiting valves (73).

15. Vibration damper according to claim 14, characterised in that the non-return valve for the main flow comprises a non-return valve body (75) acted on by a spring (81) on the damper valve body (5) with a connecting cross-section (77) on both sides of the valve body which is covered in its turn by a spring-loaded closure body (79) so that in one direction of flow of the main flow the closure body (79) lifts off the damper valve body and in the other direction of flow the non-return valve body (75) lifts off the damper valve body.

16. Vibration damper according to claim 13, characterised in that the over-pressure valve releases the auxiliary flow, in that a closure body lifts off and bypasses the non-return valve for the control chamber (19).

17. Vibration damper according to claims 2 or 5, characterised in that the non-return valves (37; 37b) for the auxiliary flows are equipped with pressure-limiting valves (91).

18. Vibration damper according to claim 5, characterised in that the over-pressure valve (91) for the auxiliary flow is arranged within the control chamber (19; 19a; 19b), whereby the over-pressure valve (91) and the non-return valve (37a; 37b) take the form of a combined component and are urged together as two disc bodies which lift from their valve seating faces alternately.

19. Vibration damper according to any one of claims 1 to 17, characterised in that the main valve body comprises two individual bodies (83; 87), one of them (83) representing the guide body and the other the seating body (87).

20. Vibration damper according to claims 1 or 2, characterised in that the preliminary stage valve is always partially open so that the main stage valve (21a; 21b) acts simultaneously as a pressure-limiting valve.

21. Vibration damper according to claim 20, characterised in that the effective hydraulic valve opening areas of the main stage valve are greater than the valve closing areas.

22. Vibration damper according to claims 1 or 2, characterised in that the actuator comprises a shifting motor in conjunction with a rotary slide (39).

23. Vibration damper according to claim 1 or 2, characterised in that the actuator comprises a ring magnet (49) in conjunction with an axially displaceable armature (51).

24. Vibration damper according to claim 23, characterised in that the displaceable armature (51) forms a valve seating.

25. Vibration damper according to one of claim 23 or 24, characterised in that a coupling rod (51c) is arranged within the armature and has a ball end at least at one end and with a matching opposing surface it forms a compensation for angular offset.

26. Vibration damper according to claims 22 or 23, characterised in that the actuator is continuously adjustable.

27. Vibration damper according to claims 22 or 23, characterised in that the actuator is adjustable in steps.

28. Vibration damper according to claim 1, characterised in that the damper valve assembly (1) has two separate control chambers (19a; 19b), one control chamber (19a; 19b), having flow through it for each direction of flow and the connections between the control chambers (19a; 19b) and the ante-chamber (23) being controlled by a common actuator, so that altogether two basic adjustment ranges of the damper valve assembly (1) arise, the one bringing with it and adjustment of the damping force which is of the same sense for both directions of flow and the other bringing with it an alternate adjustment of the damping force.

29. Vibration damper according to claim 1, characterised in that the damper valve assembly (1) has two separate control chambers (19a; 19b), one control chamber (19a; 19b) having flow through it for each direction of flow and the connection between the control chambers (19a; 19b) and the ante-chamber (23) being controlled by a common actuator, so that for each direction of flow through the damper valve assembly (81) at least two different damping force characteristics are present, which can be set in the same sense or alternate senses for the two directions of flow depending on the position of the actuator.

30. Vibration damper according to claim 20, characterised in that the connection between the ante-chamber (23) and the control chamber (19; 19a; 19b) forms the preliminary opening cross-section.

31. Vibration damper according to one of claims 1 to 30, characterised in that the damper valve housing (5) includes respectively an end-position damper valve head (7) and a damper valve intermediate body (9).

32. Vibration damper according to claim 31, characterised in that the damper valve heads (7) are arranged mirror fashion within the damper valve housing (5).

33. Vibration damper according to claim 31, characterised in that a cover tube (5a) is arranged concentric with the damper valve intermediate body (9) and at least one damper valve head can be slid relative to the cover tube before securing to it so that the axial structural length of the damper valve intermediate body (9) can be adjusted at will.

34. Vibration damper according to claim 33, characterised in that the securing between the damper valve head (7) and the cover tube (5a) is achieved by means of plastic deformation.

35. Vibration damper according to one of claims 1 to 32, characterised in that the damper valve head (7) and the damper valve intermediate body (9) are combined to form a structural unit so that the damper valve housing (5) comprises two equal but mirror-image individual components.

36. Vibration damper according to any claim, characterised in that the main stage valves (21a; 21b) are located on a spigot portion (17) associated with the piston rod (3).

37. Vibration damper according to claim 1, characterised in that the damper valve assembly (1) has available an emergency operating position comprising at least one spring arrangement (63) which presses the armature (51) of the actuator against an engaging face (65), with which an intermediate damper force setting is associated.

38. Vibration damper according to claims 1 or 2, characterised in that the damper valve assembly (1) has available an actuator which has a pressure-balanced actuating member (39; 51).

39. Vibration damper according to claim 2, characterised in that the damper valve assembly (1) has a two-branched control chamber (19), the two portions (19a/19b) of the control chamber being connected together through the preliminary stage valve (39/51a).

40. Vibration damper according to claim 2, characterised in that the passage of the auxiliary flow through connecting bores (107a/107b) takes place outside the main stage valve bodies (21a/21b).

## Revendications

1. Amortisseur ayant une force d'amortissement réglable, comprenant un tube de pression rempli d'un milieu d'amortissement et contenant un piston disposé sur une tige de piston axialement mobile et partageant un espace de travail en une chambre de travail côté tige de piston et une chambre de travail éloignée de la tige de piston, avec établissement, entre les deux chambres de travail, d'un courant de milieu d'amortissement se partageant en un courant principal et un courant secondaire, un dispositif de soupapes d'amortissement, comportant un corps de soupapes d'amortissement, une soupape d'étage principal pour chaque direction d'écoulement, formée chaque fois par un clapet de soupape d'étage principal, ainsi qu'une soupape d'étage préliminaire qui pilote les soupapes d'étage principal, de même qu'un actionneur réglable qui influence une liaison d'écoulement entre une chambre de commande et une chambre de travail, caractérisé en ce que la chambre de commande (19; 19a; 19b) est délimitée axialement par le premier et le second clapet de soupape d'étage principal (21a; 21b), qui sont chargés par une force élastique, le premier clapet de soupape d'étage principal, lorsque du milieu d'amortissement s'écoule vers lui, se déplaçant axialement dans la chambre de commande (19; 19a; 19b) à partir de la position de soupape fermée à une position ouverte en s'approchant du second clapet de soupape d'étage principal, lequel est maintenu par le milieu d'amortissement à la position de soupape fermée tandis que, lorsque la direction d'écoulement du milieu d'amortissement est inversée, le second clapet de soupape d'étage principal se déplace axialement à partir de la position de soupape fermée à une position ouverte en direction du premier clapet de soupape d'étage principal, lequel occupe la position de soupape fermée.

2. Amortisseur selon le préambule de la revendication 1, caractérisé en ce que la soupape d'étage principal est parcourue par le courant principal et la soupape d'étage préliminaire (39, 51a) est parcourue par le courant secondaire dans les deux directions d'écoulement.

3. Amortisseur selon les revendications 1 et 2, caractérisé en ce que, à l'intérieur du corps (7) des soupapes d'amortissement, le courant secondaire de milieu d'amortissement passe à travers la chambre de commande (19; 19a; 19b) et le courant principal passe par des canaux de liaison (11a; 11b) situés radialement à l'extérieur de la chambre de commande (19; 19a; 19b), et une préchambre (23), formée par l'actionneur, est disposée concentriquement par rapport à la chambre de commande (19; 19a; 19b), une liaison pour au moins une direction d'écoulement existant entre la préchambre (23) et une chambre de travail (33; 35) et une liaison d'écoulement ou communication radiale (25), influencée par l'actionneur, étant prévue entre la chambre de commande (19; 19a; 19b) et la préchambre (23).

4. Amortisseur selon les revendications 1 et 2, caractérisé en ce que, à l'intérieur du corps (5) des soupapes d'amortissement, le courant principal et le courant secondaire possèdent un orifice d'admission (15a; 15b) commun pour au moins une direction de traversée ou d'écoulement du milieu à travers le dispositif de soupapes d'amortissement.

5. Amortisseur selon la revendication 1, caractérisé en ce que le dispositif de soupapes d'amortissement (1) est équipé de soupapes antiretour (29a; 29b;31a; 31b; 37a; 37b) pour le courant principal et/ou le courant secondaire, de manière que, pour les deux directions de traversée de la chambre de commande (19; 19a; 19b), le réglage de la force d'amortissement s'effectue par le contrôle de l'écoulement de sortie du courant secondaire entre la chambre de commande (19; 19a; 19b) et la préchambre (23).

6. Amortisseur selon la revendication 1, caractérisé en ce que le dispositif de soupapes d'amortissement est équipé de soupapes antiretour (29a; 29b; 31a; 31b; 37a; 37b) pour le courant principal et/ou le courant secondaire, de manière que, pour une direction de traversée de la chambre de commande, le réglage de la force d'amortissement s'effectue par le contrôle de l'écoulement entrant et, pour l'autre direction de traversée, par le contrôle de l'écoulement sortant du courant secondaire entre la chambre de commande (19; 19a; 19b) et la préchambre (23).

7. Amortisseur selon la revendication 1 ou 2, caractérisé en ce que les clapets de soupape d'étage principal (21a/21b) présentent des orifices d'étranglement à travers desquels le courant secondaire pénètre dans la chambre de commande (19; 19a; 19b).

8. Amortisseur selon la revendication 1 ou 2, caractérisé en ce que les orifices menant aux chambres de commande (19a; 19b) ou à la préchambre (23; 23a; 23b) présentent des soupapes de passage (103; 105; 111) agissant en fonction de la direction, qui découvrent une plus grande section d'étranglement pour la direction d'écoulement de sortie des chambres concernées que pour la direction d'écoulement d'entrée.

9. Amortisseur selon la revendication 2 ou 4, caractérisé en ce que les clapets de soupape d'étage principal (21a; 21b) sont pourvus de soupapes antiretour (37a; 37b) qui s'ouvrent pour la direction d'écoulement d'entrée du courant secondaire dans la chambre de commande (19; 19a; 19b).

10. Amortisseur selon la revendication 8, caractérisé en ce que l'une au moins des soupapes antiretour (37a; 37b) est formée par une bague de fermeture élastiquement déformable.

11. Amortisseur selon la revendication 8, caractérisé en ce que les soupapes d'étage principal possèdent des caractéristiques de force d'amortissement dépendantes de la direction et qui sont obtenues par plusieurs ressorts (45a; 45b), l'agencement étant tel que les ressorts (45a; 45b) s'appuient ensemble sur un clapet de soupape d'étage principal (21a) et qu'une partie des ressorts (45a; 45b) attaque l'autre clapet de soupape d'étage principal (21b), de sorte que les forces des ressorts s'additionnent pour le clapet (21a) et qu'une partie des forces des ressorts agit sur l'autre clapet (21b).

12. Amortisseur selon la revendication 1, caractérisé en ce que les soupapes d'étage principal possèdent des caractéristiques de force d'amortissement dépendantes de la direction et qui sont obtenues par plusieurs ressorts (45a; 45b), un ressort (45a) s'appuyant sur un clapet de soupape d'étage principal (21a), un ressort (45b) s'appuyant sur le clapet de soupape d'étage principal (21b) et les deux ressorts (45a; 45b) attaquant d'un côté et de l'autre une douille guide-ressorts (45c) qui est fixe par rapport à une partie intermédiaire (9) du corps des soupapes d'amortissement.

13. Amortisseur selon la revendication 1 ou 2, caractérisé en ce que le dispositif de soupapes d'amortissement (1) comporte au moins une soupape limitatrice de pression.

14. Amortisseur selon la revendication 5 ou 13, caractérisé en ce que les soupapes antiretour pour les courants principaux sont pourvues de soupapes limitatrices de pression (73).

15. Amortisseur selon la revendication 14, caractérisé en ce que la soupape antiretour pour le courant principal est formée d'un clapet de soupape antiretour (75) appliqué avec précontrainte par un ressort (81) contre le corps (5) des soupapes d'amortissement, clapet qui possède une section de liaison (77) menant aux deux côtés du clapet et qui est elle-même recouverte par un obturateur (79) chargé par ressort, de sorte que l'obturateur (79) est levé dudit corps pour une direction de traversée du courant principal et que le clapet de soupape antiretour (75) est levé dudit corps pour l'autre direction.

16. Amortisseur selon la revendication 13, caractérisé en ce que la soupape de surpression laisse passer le courant secondaire par la levée d'un obturateur et par le contournement de la soupape antiretour pour la chambre de commande (19).

17. Amortisseur selon la revendication 2 ou 5, caractérisé en ce que les soupapes antiretour (37a; 37b) pour les courants secondaires sont équipées de soupapes limitatrices de pression (91).

18. Amortisseur selon la revendication 5, caractérisé en ce que la soupape de surpression (91) pour le courant secondaire est disposée à l'intérieur de la chambre de commande (19; 19a; 19b), la soupape de surpression (91) et la soupape antiretour (37a; 37b) étant réalisée comme un composant combiné et se présentant sous la forme de deux pièces discoïdes serrées l'une contre l'autre et qui se lèvent alternativement de leurs surfaces de siège de soupape.

19. Amortisseur selon l'une quelconque des revendications 1 à 17, caractérisé en ce que le clapet de soupape principale est composé de deux pièces (83; 87) dont l'une (83) représente une pièce de guidage et l'autre (87) une pièce formant siège.

20. Amortisseur selon la revendication 1 ou 2, caractérisé en ce que la soupape d'étage préliminaire est toujours partiellement ouverte, de sorte que la soupape d'étage principal (21a; 21b) représente en même temps une soupape limitatrice de pression.

21. Amortisseur selon la revendication 20, caractérisé en ce que les faces utiles, hydrauliquement, agissant dans le sens de l'ouverture de la soupape d'étage principal, sont plus grandes que les faces utiles agissant dans le sens de la fermeture de cette soupape.

22. Amortisseur selon la revendication 1 ou 2, caractérisé en ce que l'actionneur est constitué d'un moteur de positionnement combiné à un tiroir rotatif (39).

23. Amortisseur selon la revendication 1 ou 2, caractérisé en ce que l'actionneur est composé d'un électroaimant annulaire (49) auquel est adjointe une armature (51) axialement mobile.

24. Amortisseur selon la revendication 23, caractérisé en ce que l'armature mobile (51) représente une soupape à siège.

25. Amortisseur selon la revendication 23 ou 24, caractérisé en ce qu'une biellette d'accouplement (51c) est disposée à l'intérieur de l'armature (51), biellette dont au moins une extrémité possède une forme bombée et constitue avec une surface antagoniste adaptée un dispositif de compensation de décalage angulaire.

26. Amortisseur selon la revendication 22 ou 23, caractérisé en ce que l'actionneur peut être positionné de façon continue.

27. Amortisseur selon la revendication 22 ou 23, caractérisé en ce que l'actionneur peut être positionné de façon échelonnée.

28. Amortisseur selon la revendication 1, caractérisé en ce que le dispositif de soupape d'amortissement (1) possède deux chambres de commande (19a; 19b) séparées, dont l'une est parcourue par le milieu d'amortissement pour chaque direction de traversée et les liaisons entre les chambres de commande (19a; 19b) et la préchambre (23) sont contrôlées par un actionneur commun, ce qui crée deux gammes de réglages de base du dispositif de soupapes d'amortissement (1), dont l'une présente un réglage dans le même sens de la force d'amortissement pour les deux directions de traversée et l'autre gamme présente des réglages de sens contraire de la force d'amortissement pour les deux directions de traversée.

29. Amortisseur selon la revendication 1, caractérisé en ce que le dispositif de soupapes d'amortissement (1) possède deux chambres de commande (19a; 19b) séparées dont l'une est parcourue par le milieu d'amortissement pour chaque direction de traversée et les liaisons entre les chambres de commande (19a; 19b) et la préchambre (23) sont contrôlées par un actionneur commun, ce qui crée au moins deux caractéristiques de force d'amortissement différentes pour chaque direction de traversée du dispositif de soupapes d'amortissement (1), caractéristiques qui peuvent être ajustées, en fonction de la position de l'actionneur, dans le même sens ou suivant des sens contraires pour les deux directions de traversée.

30. Amortisseur selon la revendication 20, caractérisé en ce que la liaison entre la préchambre (23) et la chambre de commande (19; 19a; 19b) représente la section d'ouverture préliminaire.

31. Amortisseur selon une des revendications 1 à 30, caractérisé en ce que le corps (5) des soupapes d'amortissement comprend une partie de tête (7) pour chaque extrémité et une partie intermédiaire (9).

32. Amortisseur selon la revendication 31, caractérisé en ce que les parties de tête (7) sont disposées symétriquement dans le corps (5).

33. Amortisseur selon la revendication 31, caractérisé en ce qu'un tube enveloppe (5a) est disposé concentriquement à la partie intermédiaire (9) du corps des soupapes d'amortissement et au moins une partie de tête du corps peut être déplacée par rapport au tube enveloppe avant sa fixation à celui-ci, de sorte que la longueur axiale de la partie intermédiaire (9) du corps peut être ajustée selon les désirs.

34. Amortisseur selon la revendication 33, caractérisé en ce que la fixation entre la partie de tête (7) du corps et le tube enveloppe (5) est réalisée par une déformation plastique.

35. Amortisseur selon une des revendications 1 à 32, caractérisé en ce qu'une partie de tête (7) et une moitié de la partie intermédiaire (9) sont assemblées chaque fois, de sorte que le corps (5) des soupapes d'amortissement est composé de deux pièces identiques, mais symétriques.

36. Amortisseur selon l'une quelconque des revendications précédentes, caractérisé en ce que les clapets de soupape d'étage principal (21a; 21b) se centrent sur un segment terminal (17) coordonné à la tige de piston (3).

37. Amortisseur selon la revendication 1, caractérisé en ce que le dispositif de soupapes d'amortissement (1) dispose d'une position de fonctionnement de secours définie par au moins un dispositif élastique (63) qui presse l'armature (51) de l'actionneur contre une face d'appui (65), position à laquelle est lié un réglage moyen de la force d'amortissement.

38. Amortisseur selon la revendication ou 2, caractérisé en ce que le dispositif de soupapes d'amortissement (1) dispose d'un actionneur possédant un organe de positionnement (39; 51) équilibré en pression.

39. Amortisseur selon la revendication 2, caractérisé en ce que le dispositif de soupapes d'amortissement (1) comporte une chambre de commande (19) divisée en deux parties (19a; 19b) qui sont reliées entre elles à travers la soupape d'étage préliminaire (39; 51a).

40. Amortisseur selon la revendication 2, caractérisé en ce que l'entrée du courant secondaire s'effectue à travers des perçages de liaison (107a/107b) situés à l'extérieur des clapets de soupape d'étage principal (21a/21b).
